(19) **Europäisches Patentamt**
**European Patent Office**
**Office européen des brevets**

(11) **EP 2 610 985 B1**

(12) **FASCICULE DE BREVET EUROPEEN**

(45) Date de publication et mention
de la délivrance du brevet:
**05.09.2018 Bulletin 2018/36**

(51) Int Cl.:
*H02J 4/00* *(2006.01)*  *H02J 5/00* *(2016.01)*
*H02J 1/10* *(2006.01)*  *H02J 7/34* *(2006.01)*
*H02J 9/00* *(2006.01)*  *H02J 9/06* *(2006.01)*
*H02M 1/10* *(2006.01)*  *H02J 1/00* *(2006.01)*

(21) Numéro de dépôt: **12198654.1**

(22) Date de dépôt: **20.12.2012**

(54) **Système d'alimentation électrique à entrée multiple hétérogène.**

Stromversorgungssystem mit heterogenem Mehrfacheingang

Electricity supply system with heterogeneous multiple input.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.12.2011 FR 1104157**

(43) Date de publication de la demande:
**03.07.2013 Bulletin 2013/27**

(73) Titulaire: **Thales**
**92200 Neuilly Sur Seine (FR)**

(72) Inventeurs:
• **Taurand, Christophe**
  **26027 VALENCE CEDEX (FR)**

• **Mollov, Stefan**
  **26027 VALENCE CEDEX (FR)**

(74) Mandataire: **Lavoix**
**2, place d'Estienne d'Orves**
**75441 Paris Cedex 09 (FR)**

(56) Documents cités:
EP-A1- 2 163 909      EP-A2- 2 363 940
WO-A1-2006/024007     WO-A2-97/21265
WO-A2-2009/125007     FR-A1- 2 815 789
FR-A1- 2 931 801      FR-A1- 2 936 221
US-A1- 2005 134 239   US-A1- 2006 017 327
US-A1- 2008 150 356   US-A1- 2011 273 012

**Description**

La présente invention concerne un système d'alimentation électrique à entrées multiples hétérogènes, c'est-à-dire raccordé en entrée à une pluralité de réseaux d'alimentation électrique délivrant un courant continu ou alternatif.

Plus particulièrement, l'invention concerne un système d'alimentation propre à être raccordé en entrée à N réseaux d'alimentation distincts délivrant une tension d'entrée continue ou alternative et à délivrer une tension de distribution continue, N étant un nombre entier supérieur ou égal à 2, du type comportant :

- un bus de distribution fonctionnant sous la tension de distribution,
- N convertisseurs unidirectionnels propres à être respectivement raccordés en entrée à un réseau d'alimentation donné et propres à délivrer au bus de distribution une puissance électrique, et
- des moyens de commande propres à commander les convertisseurs unidirectionnels.

Ce type d'alimentation ou des alimentations s'en rapprochant sont par exemple décrits dans US 2006/017327 A1, EP 2 363 940 A2, FR 2 936 221 A1 et WO 97/21265. Ce type d'alimentation est particulièrement utilisé en aéronautique et est destiné à fournir une tension régulée à des circuits électroniques embarqués à bord d'un aéronef.

Dès lors, ces alimentations sont soumises à un certain nombre de contraintes spécifiques.

Par exemple, elles doivent être propres à réaliser le basculement depuis un réseau d'alimentation prioritaire vers un réseau d'alimentation redondant de façon sécurisée - c'est-à-dire en prévenant tout échange d'énergie entre lesdits réseaux -, avec des phases transitoires bien contrôlées et sans oscillations dans un contexte d'augmentation de la dynamique et de l'impédance de ces réseaux d'alimentation. Le prélèvement de puissance sur des réseaux autres que le réseau prioritaire doit par ailleurs être minimisé.

En outre, elles doivent permettre le prélèvement d'une tension de repos sur chacun des réseaux d'alimentation redondants pour l'alimentation d'équipements électroniques auxiliaires.

Ces systèmes d'alimentation doivent également permettre la tenue de microcoupures survenant sur le réseau d'alimentation sélectionné et permettre le filtrage des appels de courant issus des équipements électroniques aval.

Enfin, elles doivent être en mesure de fonctionner à partir de réseaux d'alimentation délivrant des puissances électriques présentant des formats très différents, par exemple dont le courant fourni est continu pour certains et alternatif pour d'autres, dont la tension et/ou la fréquence est différente, et qui ne sont pas raccordés à un même potentiel de masse.

FR 2 815 789 décrit un système d'alimentation du type précité et propre à réaliser la sélection d'un réseau d'alimentation parmi une pluralité de réseaux d'alimentation. La logique de commutation entre les réseaux d'alimentation est rigide et mise en oeuvre par un organe de commande dédié propre à commander ouverts ou fermés des contacteurs d'un aiguillage à diodes en fonction de la tension délivrée par chacun des convertisseurs.

US 2005/134239 décrit également un système d'alimentation du type précité. Dans ce document, diverses topologies sont envisagées, dans lesquelles des tensions continues ou alternatives délivrées par des réseaux d'alimentation distincts sont combinées afin d'alimenter une charge située en aval du système d'alimentation.

Toutefois, ces solutions ne donnent pas entière satisfaction.

En effet, dans le contexte actuel d'augmentation de dynamique des réseaux d'alimentation, la rigidité de la logique de basculement du système d'alimentation décrit dans le premier document implique des basculements fréquents et brutaux entre les réseaux d'alimentation, ainsi que des phases de fonctionnement à faible tension des convertisseurs unidirectionnels. Ces convertisseurs sont alors fortement sollicités et les réseaux d'alimentation redondants sont mis à contribution plus que strictement nécessaire. Ceci se traduit notamment par des perturbations de la tension de distribution délivrée aux équipements électroniques situés en aval.

Dans le deuxième document cité, le système d'alimentation n'est pas propre à réaliser une sélection priorisée des réseaux d'alimentation. En outre, il n'est pas adapté pour filtrer les appels de courant en provenance des équipements situés en aval.

Un des objets de l'invention est de résoudre ces problèmes.

A cet effet, l'invention concerne un système d'alimentation propre à être raccordé en entrée à N réseaux d'alimentation distincts délivrant une tension d'entrée continue ou alternative et à délivrer une tension de distribution continue, N étant un nombre entier supérieur ou égal à 2, du type comportant :

- un bus de distribution fonctionnant sous la tension de distribution,
- N convertisseurs unidirectionnels propres à être respectivement raccordés en entrée à un réseau d'alimentation donné et propres à délivrer au bus de distribution une puissance électrique,
- des moyens de commande propres à commander les convertisseurs unidirectionnels, tel que revendiqué dans la revendication 1.

Selon d'autres aspects de l'invention, l'invention comprend l'une ou plusieurs des caractéristiques suivantes, prise(s) isolément ou selon toute(s) combinaison(s) techniquement possible(s), et dans lesquelles :

- les moyens de commande comportent N boucles de régulation de stockage respectivement associées à un convertisseur unidirectionnel et propres à réguler la puissance électrique délivrée par ledit convertisseur unidirectionnel au bus de distribution, chaque boucle de régulation de stockage comportant une caractéristique de contrôle à réduction progressive au-delà du seuil de tension associé au réseau d'alimentation correspondant, la pente de ladite réduction progressive correspondant au gain statique de ladite boucle de régulation de stockage ;

- les réductions progressives des caractéristiques de contrôle des N boucles de régulation de stockage sont opérées sur des plages de valeurs de la tension de stockage disjointes les unes des autres ;

- la valeur maximale de la caractéristique de contrôle d'une boucle de régulation de stockage est également la valeur maximale des caractéristiques de contrôle des N-1 autres boucles de régulation de stockage ;

- les gains statiques respectifs des N boucles de régulation de stockage présentent des valeurs décroissantes, le gain statique d'une boucle de régulation de stockage dont le convertisseur unidirectionnel est associé à un premier réseau d'alimentation étant inférieur au gain statique des boucles de régulation de stockage dont le convertisseur unidirectionnel est associé à un réseau d'alimentation prioritaire par rapport audit premier réseau d'alimentation ;

- le gain statique d'une boucle de régulation de stockage dont le convertisseur unidirectionnel est associé à un premier réseau d'alimentation est déterminé par l'équation $G_i = G_{i-1} * V_{STi} / V_{STi-1}$, où $G_i$ est le gain statique de ladite boucle de régulation de stockage, $V_{STi}$ est le seuil de tension de stockage associé audit premier réseau d'alimentation, $V_{STi-1}$ est le plus petit des seuils de tension de stockage supérieurs au seuil de tension de stockage $V_{STi}$, et $G_{i-1}$ est le gain statique de la boucle de régulation de stockage dont le convertisseur unidirectionnel est associé au réseau d'alimentation dont le seuil de tension de stockage est $V_{STi-1}$ ;

- les moyens de commande comprennent N boucles de régulation de distribution respectivement associées à un convertisseur unidirectionnel donné et propres à réguler la puissance électrique délivrée par ledit convertisseur unidirectionnel au bus de distribution en fonction de la tension de distribution pour la limitation de la tension de distribution ou pour la limitation d'un courant de distribution fourni au bus de distribution ;

- chaque convertisseur unidirectionnel associé à un réseau d'alimentation donné comprend :

- un réseau intermédiaire,

- un convertisseur primaire unidirectionnel propre à empêcher les transferts d'énergie électrique entre le réseau d'alimentation auquel ledit convertisseur unidirectionnel est associé et les autres réseaux d'alimentation, ledit convertisseur primaire unidirectionnel étant raccordé en entrée au réseau d'alimentation correspondant et propre à délivrer au réseau intermédiaire une tension intermédiaire régulée à partir de la tension d'entrée dudit réseau d'alimentation, et

- un isolateur bidirectionnel propre à isoler galvaniquement le réseau d'alimentation auquel ledit convertisseur unidirectionnel est associé des autres réseaux d'alimentation, ledit isolateur bidirectionnel étant raccordé en entrée au réseau intermédiaire et en sortie au bus de distribution et étant propre à être commandé par les moyens de commande pour la régulation de la puissance électrique délivrée par le convertisseur unidirectionnel au bus de distribution et pour la régulation d'une puissance électrique en provenance du bus de distribution et délivrée par ledit isolateur bidirectionnel au réseau intermédiaire correspondant ;

- les convertisseurs primaires comprennent des moyens de redressement de la tension, des moyens de filtrage de la tension en mode commun et en mode différentiel, des moyens de protection contre les surtensions et de moyens de protection contre la foudre ;

- les moyens de commande comprennent N boucles à réaction positive respectivement associées à un isolateur bidirectionnel donné et propres à réguler en fonction de la tension intermédiaire du réseau intermédiaire correspondant la puissance électrique délivrée par ledit isolateur bidirectionnel au bus de distribution, et donc par le convertisseur unidirectionnel correspondant, au bus de distribution d'une part, et d'autre part, la puissance électrique délivrée par ledit isolateur bidirectionnel au réseau intermédiaire correspondant ;

- pour chaque convertisseur unidirectionnel, la boucle de régulation de stockage associée est propre à réguler la puissance électrique délivrée par ledit convertisseur unidirectionnel en fonction de la tension de stockage via une première variable de contrôle, la boucle de régulation de distribution associée est propre à réguler la puissance électrique délivrée par ledit convertisseur unidirectionnel, en fonction de la tension de distribution via une deuxième variable de contrôle, et la boucle à réaction positive associée est propre à réguler la puissance délivrée par ledit convertisseur unidirectionnel via une troisième variable de contrôle, la puissance délivrée par ledit convertisseur unidirectionnel au bus de distribution étant proportionnelle à la différence entre d'une part le minimum des première et deuxième variables de contrôle, et d'autre part la troisième variable de contrôle ;

- le dispositif de stockage d'énergie est raccordé au bus de distribution via un chargeur bidirectionnel propre à réaliser le transfert d'énergie électrique entre le bus de distribution et le dispositif de stockage d'énergie ; et

- le dispositif de stockage d'énergie comprend une boucle de régulation de chargeur propre à commander le chargeur bidirectionnel pour la régulation du transfert d'énergie entre le chargeur bidirectionnel et le bus de distribution pour l'asservissement de la tension de distribution à une tension de distribution de référence.

L'invention sera mieux comprise à la lecture de la description qui va suivre, donnée uniquement à titre d'exemple, et faite en référence aux dessins annexés sur lesquels :

- la Figure 1 est une représentation schématique d'un système d'alimentation selon un premier mode de réalisation de l'invention ;
- la Figure 2 est une vue analogue à celle de la Figure 1 d'un système d'alimentation selon un deuxième mode de réalisation de l'invention ;
- la Figure 3 est une vue analogue à celle de la Figure 3 d'un système d'alimentation selon un troisième mode de réalisation de l'invention ;
- la Figure 4 est un diagramme de représentation de caractéristiques de contrôle de boucles de régulation de stockage que comprend l'invention ; et
- la Figure 5 est une représentation schématique de variations de tensions et de puissances lors du fonctionnement d'un système d'alimentation selon le troisième mode de réalisation.

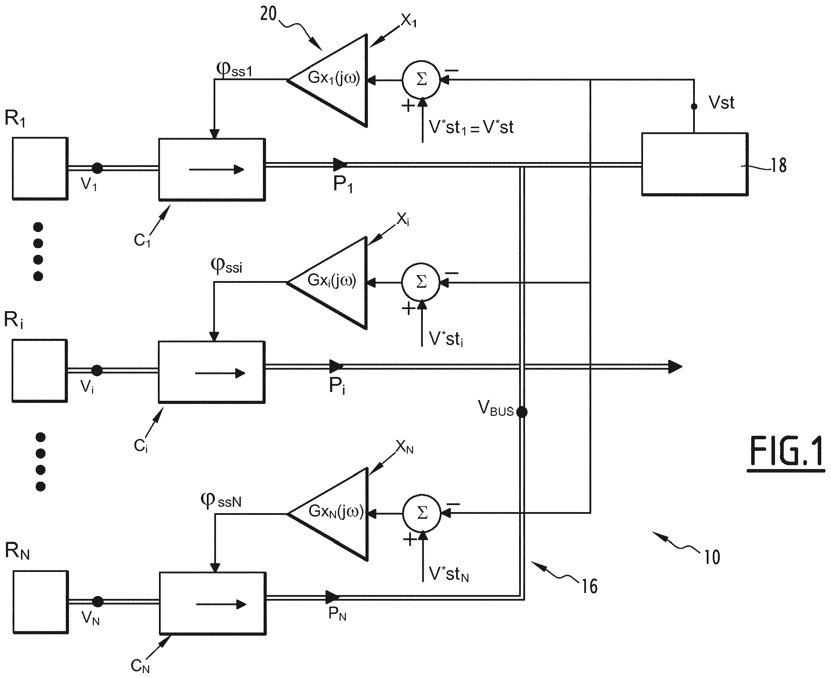

En référence à la Figure 1 qui illustre un premier mode de réalisation de l'invention, le système d'alimentation 10 à entrées multiples hétérogènes, ci-après « système d'alimentation 10 » ou « système 10 », est propre à être raccordé en entrée à N réseaux d'alimentation $R_i$, N étant un entier supérieur ou égal à 2 et où i est un entier compris entre 1 à N, à prévenir les transferts d'énergie entre les réseaux d'alimentation $R_i$ et à délivrer une tension de distribution $V_{BUS}$ continue et régulée à des équipements électroniques situés en aval à partir de tensions d'entrée $V_1$, ..., $V_N$ délivrées par les réseaux d'alimentation $R_i$.

Pour la fourniture de la tension de distribution $V_{BUS}$, le système 10 est propre à prélever de l'énergie électrique sur les réseaux d'alimentation $R_i$ selon un ordre de priorité entre ces réseaux. Cet ordre de priorité est décrit plus en détail ci-dessous. Le prélèvement de l'énergie électrique est réalisé de façon sécurisée, sans échange d'énergie entre les réseaux d'alimentation $R_i$, et de façon à minimiser l'énergie électrique prélevée sur les réseaux d'alimentation $R_i$ autres que le réseau d'alimentation prioritaire.

En outre, le système 10 est adapté pour la tenue de microcoupures ou de disparitions de la tension d'entrée $V_i$ du réseau d'alimentation $R_i$ couramment sélectionné, et pour filtrer les appels de courant issus des équipements électroniques situés en aval.

A cet effet, le système 10 comprend N convertisseurs unidirectionnels $C_1$, ..., $C_N$, un bus de distribution 16, et un dispositif de stockage d'énergie 18. Le système d'alimentation 10 comprend également des moyens de commande 20 pour la commande des N convertisseurs unidirectionnels $C_i$.

Les réseaux d'alimentation $R_i$ délivrent de l'énergie électrique présentant des formats variés. Par exemple, certains courants délivrés par les réseaux d'alimentation $R_i$ sont continus et la tension d'entrée $V_i$ correspondante vaut 28 V ou 270 V, et le courant issu d'autres réseaux d'alimentation $R_i$ est alternatif et la tension d'entrée $V_i$ vaut par exemple 115 V ou 230 V et sa fréquence est comprise dans la plage 46Hz-800Hz.

Dans l'exemple de la Figure 1, le système 10 est raccordé à N réseaux d'alimentation $R_1$, ..., $R_N$ dont certains sont alimentés par des alternateurs et dont d'autres sont alimentés par des batteries. Les tensions d'entrée $V_1$, ..., $V_N$ présentent alors des dynamiques importantes, les impédances des réseaux $R_i$ étant aussi importantes. Cela impose un profil de tension aux entrées des convertisseurs $C_i$ très dynamique et peu contrôlé.

Les convertisseurs unidirectionnels $C_i$ sont propres à prévenir tout transfert d'énergie électrique entre les réseaux d'alimentation $R_i$ et à respectivement délivrer une puissance électrique $P_1$, ..., $P_N$ régulée au bus de distribution 16 à partir d'une tension d'entrée $V_1$, ..., $V_N$.

A cet effet, chaque convertisseur unidirectionnel $C_i$ est propre à être raccordé en entrée à un réseau d'alimentation $R_i$ donné et est raccordé en sortie au bus de distribution 16.

Chaque convertisseur unidirectionnel est également propre à être commandé par les moyens de commande 20 pour la régulation de la puissance électrique $P_1$, ..., $P_N$ qu'il délivre au bus de distribution 16, comme on le verra par la suite.

En outre, chaque convertisseur unidirectionnel $C_i$ raccordé à un réseau d'alimentation $R_i$ fournissant un courant alternatif est propre à redresser le courant de façon à délivrer au bus de distribution 16 un courant continu.

En variante, chaque convertisseur unidirectionnel $C_i$ est également propre à isoler galvaniquement le réseau d'alimentation $R_i$ auquel il est raccordé des autres réseaux d'alimentation $R_1$, ..., $R_N$.

De manière connue, de tels convertisseurs 14 sont par exemple réalisés par des convertisseurs de type « Flyback » connus de l'homme du métier.

Le bus de distribution 16 est propre à assurer le transfert d'énergie entre les réseaux d'alimentation $R_i$ et les équipements électroniques situés en aval du système d'alimentation.

A cet effet, comme indiqué précédemment, les sorties des convertisseurs unidirectionnels $C_i$ sont toutes raccordées au bus de distribution 16, qui fonctionne sous une tension de distribution $V_{BUS}$. Les équipements électroniques aval sont alors raccordés directement au bus de distribution 16, ou bien y sont raccordés via un commutateur sécurisé (non représenté) et/ou via un ou plusieurs convertisseurs de puissance.

La tension de distribution $V_{BUS}$ est propre à être asservie à une tension de distribution de référence $V^*_{BUS}$ et est propre à être maintenue inférieure à une valeur maximale $V_{BUS\_MAX}$ via la commande des convertisseurs unidirectionnels, comme on le verra par la suite.

Dans l'exemple de la Figure 1, la tension de distribution de référence $V^*_{BUS}$ est prise égale à 12 V.

Le dispositif de stockage d'énergie 18 est propre à stocker de l'énergie électrique en provenance du bus de distribution 16 et à restituer l'énergie électrique stockée au bus de distribution 16, ainsi qu'à permettre au système d'alimentation 10 la tenue de microcoupures ou de disparitions des tensions d'entrée $V_1$, ..., $V_N$.

En outre, il est propre à filtrer des pulsations de charge résultant d'appels de puissance électrique réalisées par les équipements électroniques aval. En effet, les fréquences des pulsations de charge sont généralement d'un ordre de grandeur très supérieur à celui de la fréquence des cycles de charge-décharge du dispositif de stockage d'énergie 18 qui est celui déterminant pour la commande des convertisseurs unidirectionnels $C_i$. Dès lors, les pulsations de charge sont atténuées pour les réseaux d'alimentation $R_i$, comme on le verra par la suite.

Le dispositif de stockage d'énergie 18 est raccordé au bus de distribution 16 et fonctionne sous une tension de stockage $V_{ST}$.

Dans le mode de réalisation de la Figure 1, le dispositif de stockage d'énergie 18 est un dispositif capacitif, la tension de stockage $V_{ST}$ étant représentative d'une quantité d'énergie électrique E qu'il contient. La tension de stockage $V_{ST}$ est régulée à une tension de stockage prescrite $V^*_{ST}$. Par exemple, la valeur de la tension de stockage prescrite $V^*_{ST}$ vaut 90 V.

Les moyens de commande 20 sont propres à commander simultanément les convertisseurs unidirectionnels $C_i$ pour la régulation des puissances électriques $P_1$, ..., $P_N$ délivrées par ces convertisseurs au bus de distribution 16 en fonction de la quantité d'énergie électrique E.

Dans l'exemple de la Figure 1, les moyens de commande 20 sont propres à commander les convertisseurs unidirectionnels $C_i$ pour la régulation des puissances électriques $P_1$, ..., $P_N$ délivrées par ces convertisseurs au bus de distribution 16 en fonction de la tension de stockage $V_{ST}$.

La commande des convertisseurs unidirectionnels $C_i$ par les moyens de commande 20 met en oeuvre un algorithme de régulation des puissances électriques $P_1$, ..., $P_N$ délivrées en fonction de la tension de stockage $V_{ST}$, comme on le verra par la suite.

Les moyens de commande 20 comprennent N boucles de régulation de stockage $X_1$, ..., $X_N$. Chaque boucle de régulation de stockage $X_i$ est respectivement associée à un convertisseur unidirectionnel $C_i$ donné.

Chaque boucle de régulation de stockage $X_i$ est propre à réaliser la commande du convertisseur unidirectionnel $C_i$ correspondant à partir de la mesure de la tension de stockage $V_{ST}$.

N seuils de tension de stockage $V_{ST1}$, ..., $V_{STN}$ sont respectivement associés aux N réseaux d'alimentation $R_1$, ..., $R_N$.

Ces seuils de tension de stockage $V_{ST1}$, ..., $V_{STN}$ sont décroissants et définissent un ordre de priorité entre les réseaux d'alimentation $R_i$ tel que le réseau d'alimentation $R_i$ de seuil de tension de stockage de référence $V_{STi}$ est prioritaire par rapport aux réseaux d'alimentation $R_{STi+k}$ dont les tensions de stockage de référence $V_{STi+k}$ sont inférieures, k étant un entier compris entre 1 et N-i.

Les moyens de commande 20 sont alors propres à commander le convertisseur unidirectionnel $C_i$ correspondant en fonction de la tension de stockage $V_{ST}$ pour que la puissance électrique transférée au bus de distribution 16 par les réseaux d'alimentation $R_i$ , ..., $R_N$ parmi lequel ledit réseau d'alimentation $R_i$ est prioritaire provienne préférentiellement du réseau d'alimentation $R_i$, comme on le verra par la suite.

La commande des convertisseurs unidirectionnels $C_i$ est réalisée par chaque boucle de régulation de stockage $X_i$ via une première variable de contrôle $\varphi_{SSi}$ qui est une fonction de la tension de stockage $V_{ST}$.

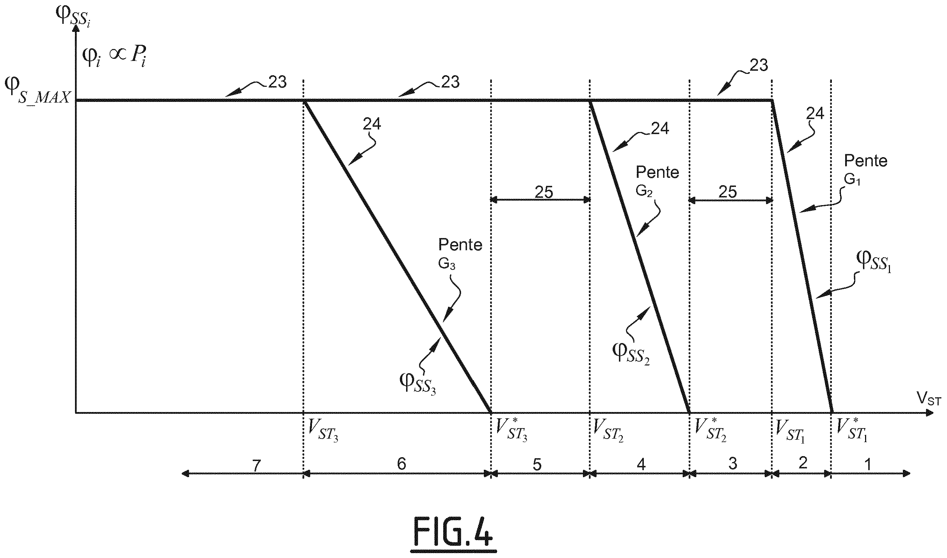

En référence à la Figure 4, qui illustre les caractéristiques de contrôle 23 des boucles de régulation de stockage $X_i$ dans le cas où N est pris égal à 3, les caractéristiques de contrôle 23, c'est-à-dire les fonctions déterminant la première variable de contrôle $\varphi_{SS1}$, ..., $\varphi_{SSN}$ des boucles de régulation $X_1$, ..., $X_N$ correspondantes en fonction de la tension de stockage $V_{ST}$, présentent chacune une réduction progressive 24 de puissance transférée, les réductions progressives 24 des différentes caractéristiques de contrôle 23 étant opérées sur des plages de valeurs de la tension de stockage $V_{ST}$ disjointes les unes des autres.

Les pentes des réductions progressives 24 correspondent respectivement au gain statique $G_i$ de la boucle de régulation de stockage $X_i$ correspondante.

La caractéristique de contrôle 23 d'une boucle de régulation de stockage $X_i$ donnée présente une tension de stockage de coupure valant le seuil de tension de stockage $V_{STi}$ associé au réseau d'alimentation $X_i$ correspondant.

Les caractéristiques de contrôle 23 présentent un maximum commun $\varphi_{S\_MAX}$ qui correspond à la commande d'un transfert de puissance électrique $P_i$ maximal entre le réseau d'alimentation $R_i$ considéré et le bus de distribution 16.

Il est à noter que lorsque la première variable de contrôle $\varphi_{SSi}$ vaut $\varphi_{S\_MAX}$, le convertisseur unidirectionnel $C_i$ est commandé pour un transfert de puissance électrique $P_i$ maximal, mais que la puissance électrique transférée au bus de distribution peut être nulle. Ceci est par exemple le cas lorsque la tension d'entrée $V_i$ correspondante est nulle.

A chaque réseau d'alimentation $R_i$, on associe

une tension de stockage de référence $V^*_{STi}$ du réseau d'alimentation $R_i$ définie par :

$V^*_{STi} = V_{STi} + \varphi_{S\_MAX}/G_i$, où $G_i$ est le gain statique de la boucle de régulation de stockage $X_i$, $\varphi_{S\_MAX}$ est le maximum des caractéristiques de contrôle 23 des boucles de régulation de distribution $X_i$ et $V_{STi}$ est le seuil de tension de stockage du réseau d'alimentation $R_i$.

La tension de stockage de référence $V^*_{STi}$ du réseau d'alimentation $R_i$ est alors la valeur de la tension de stockage à laquelle la tension de stockage $V_{ST}$ est prescrite lorsque la tension de stockage $V_{ST}$ est sur la plage de valeurs de la réduction progressive 24 de la caractéristique de contrôle 23 de la boucle de régulation de distribution $X_i$.

La tension de stockage de référence $V^*_{STi}$ correspond au minimum des valeurs de la tension de stockage $V_{ST}$ auxquelles la première variable de contrôle $\varphi_{SSi}$ vaut 0, c'est-à-dire auxquelles le convertisseur unidirectionnel $C_i$ est commandé par les moyens de commande 20 pour transférer une puissance électrique $P_i$ nulle au bus de distribution 16.

L'asservissement de la tension de stockage $V_{ST}$ à cette valeur $V^*_{STi}$ permet ainsi de minimiser le prélèvement d'énergie électrique sur le réseau d'alimentation $R_i$ correspondant.

La plage de valeurs sur laquelle la réduction progressive 24 de la caractéristique de contrôle 23 d'une boucle de régulation $X_i$ est opérée est ainsi $[V_{STi} ; V^*_{STi}]$, avec $V^*_{ST1}$ égal à $V^*_{ST}$. Cette plage de valeurs définit ainsi une région de fonctionnement du système 10 associée au réseau d'alimentation de référence $R_i$.

Les réductions progressives 24 des caractéristiques de contrôle 23 sont séparées les unes des autres par des plages de transparence 25. Les plages de transparence 25 sont respectivement associées à un réseau d'alimentation $R_i$ donné et correspondent à une quantité d'énergie que le dispositif de stockage 18 d'énergie est propre à fournir au bus de distribution 16 pour l'alimentation des équipements électroniques aval lors de la disparition de la tension d'entrée $V_i$ du réseau d'alimentation $R_i$ correspondant, comme on le verra par la suite.

Le gain statique $G_i$ de la boucle de régulation de stockage $X_i$ est déterminé par l'équation : $G_i = G_{i-1}^* V_{STi}/V_{STi-1}$, où $G_i$ est le gain statique de la boucle de régulation de stockage $X_i$, $V_{STi}$ est le seuil de tension de stockage associé au réseau d'alimentation $R_i$, $V_{STi-1}$ est le plus petit des seuils de tension de stockage supérieurs au seuil de tension de stockage $V_{STi}$, et $G_{i-1}$ est le gain de la boucle de régulation de stockage dont le convertisseur unidirectionnel est associé au réseau d'alimentation dont le seuil de tension de stockage est $V_{STi-1}$.

Les gains statiques $G_i$ des N boucles de régulation de stockage $X_i$ présentent des valeurs décroissantes, le gain statique $G_i$ d'une boucle de régulation de stockage $X_i$ dont le convertisseur unidirectionnel $C_i$ est associé à un premier réseau d'alimentation $R_i$ étant inférieur au gain statique $G_k$ des boucles de régulation de

stockage $X_i$ dont le convertisseur unidirectionnel $C_k$ est associé à un réseau d'alimentation $R_k$ prioritaire par rapport audit premier réseau d'alimentation $R_i$.

Plus le gain statique $G_i$ est élevé, plus la tension de stockage $V_{ST}$ est maintenue proche de la tension de stockage de référence $V^*_{STi}$ du réseau d'alimentation $R_i$.

En revanche, plus le gain statique $G_i$ est élevé, moins le dispositif de stockage d'énergie 18 pourra filtrer les pulsations de charge. En effet, un gain statique $G_i$ élevé se traduit par une compensation de la moindre variation de la tension de stockage $V_{ST}$ par la modification de la puissance électrique $P_i$ délivrée par son convertisseur unidirectionnel $C_i$. En d'autres termes, plus le gain statique $G_i$ est élevé, plus les pulsations de charge sont visibles pour le réseau d'alimentation $R_i$ correspondant.

En outre, lorsque la tension de stockage $V_{ST}$ diminue, l'énergie électrique contenue dans les moyens de stockage 18 disponible pour le filtrage des pulsations de charge diminue.

Ceci se traduit par une augmentation du courant traversant le dispositif de stockage d'énergie 18 et par des variations importantes de la tension de stockage $V_{ST}$.

Cette variation de tension s'exprime sous la forme suivante pour une pulsation de charge $I_{LOAD}$ sinusoïdale :

$$\Delta V_{ST} = \frac{V_{BUS}}{V_{ST}} \frac{I_{LOAD}}{Y_{Cst}}$$

Où $Y_{Cst}$ est la capacité de stockage du dispositif de stockage d'énergie.

Un meilleur filtrage des pulsations de charge est alors obtenu par une augmentation de la capacité de stockage maximale $Y_{Cst}$, ou par la relaxation de l'asservissement de la tension de stockage $V_{ST}$ à la tension de stockage de référence $V'_{STi}$ du réseau d'alimentation $R_i$, c'est-à-dire par une diminution du gain statique $G_i$ de la boucle de régulation $X_i$ correspondante.

Le fonctionnement du système d'alimentation 10 selon l'invention va maintenant être décrit en référence à la Figure 4.

La Figure 4 illustre l'algorithme de régulation des puissances électriques $P_1$, ..., $P_N$ 20 en fonction de la tension de stockage $V_{ST}$, l'algorithme étant mis en oeuvre par les moyens de commande 20. Les valeurs de la tension de stockage $V_{ST}$ sont divisées en régions (1 à 7).

La région 1 est une condition transitoire causée par le temps de réponse des boucles de régulation, comme on le verra par la suite.

Dans cette région 1, le dispositif de stockage d'énergie 18 transfère alors son énergie électrique au bus de distribution 16 pour l'alimentation des équipements électroniques aval, les convertisseurs unidirectionnels $C_i$ étant pilotés par les boucles de régulation de stockage $X_i$ pour ne pas transférer de puissance électrique $P_i$ au bus de distribution 16.

La quantité d'énergie E diminue alors, et la tension de stockage $V_{ST}$ baisse jusqu'à une région 2, qui est une région de fonctionnement du système d'alimentation 10 associée au réseau d'alimentation prioritaire $R_1$.

Dans cette région 2 délimitée par les valeurs de tension de stockage $V_{ST1}$ et $V^*_{ST}$, la boucle de régulation de stockage $X_1$ commande le convertisseur unidirectionnel $C_1$ de sorte que la tension de stockage $V_{ST}$ soit maintenue proche de la tension de stockage de référence $V^*_{ST}$. Si la tension de stockage $V_{ST}$ passe sous la tension de stockage de référence $V^*_{ST}$, la boucle de régulation de stockage $X_1$ commande l'augmentation de la puissance électrique $P_1$ de sorte que la tension de stockage $V_{ST}$ augmente.

Inversement, si la tension de stockage $V_{ST}$ dépasse $V^*_{ST}$ et pénètre dans la région 1, la boucle de régulation de stockage $X_1$ commande le convertisseur unidirectionnel de sorte que la puissance électrique $P_1$ délivrée soit nulle.

En régime permanent, les puissances électriques $P_1$, ..., $P_N$ délivrées par les convertisseurs unidirectionnels $C_1$, ..., $C_N$ au bus de distribution 16 correspondent à la puissance électrique de charge $P_{LOAD}$ délivrée en sortie aux équipements électroniques via la tension de distribution $V_{BUS}$. La tension de distribution est alors maintenue à la valeur de la tension de distribution de référence $V^*_{BUS}$.

Lors d'une diminution de la tension d'entrée $V_1$, par exemple lors d'une panne se produisant sur le réseau d'alimentation $R_1$, la puissance électrique délivrée par le convertisseur unidirectionnel $C_1$ au bus de distribution 16 diminue, ce qui tend à faire chuter la tension de stockage $V_{ST}$. La boucle de régulation $X_1$ commande au convertisseur unidirectionnel $C_1$ d'augmenter le transfert de puissance électrique $P_1$ entre le réseau d'alimentation $R_1$ et le bus de distribution 16, éventuellement jusqu'à saturation de la boucle de régulation de stockage $X_1$

La saturation de la boucle de régulation de stockage $X_i$ correspond à la commande par ladite boucle au convertisseur unidirectionnel $C_i$ correspondant d'un transfert de puissance électrique $P_i$ maximal entre le réseau d'alimentation $R_i$ et le bus de distribution 16 (la puissance électrique $P_i$ effectivement transférée pouvant être nulle).

Si la tension d'entrée $V_1$ disparaît, la puissance électrique $P_1$ délivrée par le convertisseur unidirectionnel $C_1$ au bus de distribution est insuffisante pour charger le dispositif de stockage d'énergie 18, et le dispositif de stockage d'énergie 18 se décharge en alimentant les équipements électroniques. La tension de stockage $V_{ST}$ diminue alors jusqu'à une région 3.

Cette région 3 correspond à la plage de transparence 25 du réseau d'alimentation $R_1$ dans laquelle la boucle de régulation de stockage $X_1$ est saturée, et les autres boucles de régulation de stockage $X_2$, ..., $X_N$ commandent leur convertisseur unidirectionnel respectif $C_i$ pour un transfert de puissance $P_2$, ..., $P_N$ nul entre le réseau d'alimentation $R_i$ correspondant et le bus de distribution 16.

Tant que la tension d'entrée $V_1$ du réseau d'alimentation prioritaire $R_1$ reste insuffisante, le dispositif de stockage d'énergie 18 se décharge et la tension de stockage $V_{ST}$ diminue jusqu'à passer dans une région 4.

Dans cette région 4 délimitée par les valeurs de tension de stockage $V_{ST2}$ et $V^*_{ST2}$ et qui correspond à une région de fonctionnement associée au réseau d'alimentation $R_2$, la boucle de régulation de stockage $X_2$ du réseau d'alimentation $R_2$ prioritaire après le réseau d'alimentation prioritaire $R_1$ commande au convertisseur unidirectionnel $C_2$ correspondant un transfert de puissance électrique $P_2$ vers le bus de distribution 16 afin que la tension de stockage $V_{ST}$ demeure proche de la valeur $V^*_{ST2}$, c'est-à-dire afin d'équilibrer la puissance consommée sur le réseau d'alimentation $R_2$ et la puissance fournie au bus16.

La boucle de régulation de stockage $X_1$ du réseau d'alimentation $R_1$ prioritaire demeure alors saturée.

Le gain statique $G_2$ de la boucle de régulation stockage $X_2$ est alors défini via le gain statique $G_1$ suivant l'équation $G_2 = G_1 * V_{ST2}/V_{ST1}$.

Comme précédemment, si la tension de stockage $V_{ST}$ diminue, par exemple du fait de la disparition de la tension d'entrée $V_2$, la boucle de régulation de stockage $X_2$ commande au convertisseur unidirectionnel $C_2$ d'augmenter le transfert de puissance $P_2$ entre le réseau d'alimentation $R_2$ et le bus de distribution 16 de façon à fournir un surplus d'énergie électrique pour la recharge du dispositif de stockage d'énergie 18.

Si la tension de stockage $V_{ST}$ continue de chuter malgré la saturation de la boucle de régulation de stockage $X_2$, la tension de stockage $V_{ST}$ diminue vers une seconde plage de transparence 25 qui correspond à la transparence du réseau d'alimentation $R_2$.

Sans réapparition des tensions d'entrée $V_1$ ou $V_2$, la tension de stockage $V_{ST}$ diminue alors jusqu'à une région 6 délimitée par les valeurs de tension de stockage $V_{ST3}$ et $V^*_{ST3}$. Dans cette région 6, la boucle de régulation de stockage $X_3$ commande le convertisseur unidirectionnel $C_3$ pour un transfert de puissance électrique $P_3$ de façon à ce que la tension de stockage $V_{ST}$ soit maintenue proche de la valeur $V^*_{ST3}$, c'est-à-dire de façon à équilibrer la puissance consommée sur le réseau d'alimentation $R_3$ et la puissance fournie au bus de distribution 16.

Les boucles de régulation de stockage $X_1$ et $X_2$ sont toujours saturées.

En revanche, dans la région 4, si le réseau d'alimentation prioritaire réapparaît, c'est-à-dire le réseau d'alimentation $R_1$, la puissance électrique $P_1$ transférée au bus de distribution 16 par le convertisseur unidirectionnel $C_1$ croît graduellement depuis 0.

La boucle de régulation de stockage $X_1$ de ce réseau étant saturée, la puissance électrique transférée simultanément par les deux convertisseurs unidirectionnels $C_1$ et $C_2$ au bus de distribution 16 correspond à un surplus d'énergie électrique par rapport à ce que le système d'alimentation 10 délivre aux équipements électroniques, ce qui a pour conséquence la recharge du dispositif de stockage d'énergie 18 et l'augmentation de la tension de stockage $V_{ST}$.

La tension de stockage $V_{ST}$ augmente alors jusqu'à la sortie de la région 4, c'est-à-dire la commande par la boucle de régulation de stockage $X_2$ au convertisseur unidirectionnel $C_2$ d'un transfert de puissance électrique $P_2$ nul du réseau d'alimentation $R_2$ vers le bus de distribution 16.

Le transfert de puissance électrique $P_1$ entre le réseau prioritaire $R_1$ et le bus de distribution 16 étant maximal, la tension de stockage $V_{ST}$ continue d'augmenter jusqu'à son entrée dans la région 2, qui correspond au fonctionnement nominal du système d'alimentation 10.

En pratique, initialement, le système d'alimentation 10 se trouve dans la région 7, la tension de stockage $V_{ST}$ étant nulle et toutes les boucles de régulation de stockage Xi étant saturées. Lorsqu'au moins un réseau d'alimentation est disponible, la saturation de ces boucles induit l'augmentation de ladite tension de stockage $V_{ST}$ jusqu'à son entrée dans la région de fonctionnement associée au réseau d'alimentation $R_i$ prioritaire, comme décrit ci-dessus.

La logique de commande des moyens de commande 20 est ainsi réalisée en fonction de la quantité d'énergie E du dispositif de stockage d'énergie 18 et réalise la régulation simultanée de la puissance électrique $P_i$ délivrée par chaque convertisseur unidirectionnel $C_i$ au bus de distribution 16.

Cette logique de commande s'affranchit de l'évaluation de la disponibilité des réseaux d'alimentation $R_i$ et de toute commutation qui, à un instant donné, limite à un le nombre de réseaux d'alimentation $R_i$ propres à fournir de l'énergie électrique au bus de distribution 16.

En effet, lorsque la tension de stockage $V_{ST}$ est inférieure à plusieurs seuils de tensions de stockage $V_{STi}$, les boucles de régulation de stockage $X_i$ associées aux réseaux d'alimentation $R_i$ de seuils de tension de stockage $V_{STi}$ supérieurs à la tension de stockage $V_{ST}$ sont saturées. Ces réseaux d'alimentation $R_i$ sont ainsi prêts à transférer sans délai ou commutation leur puissance électrique $P_i$ au bus de distribution 16.

Ceci permet notamment de minimiser l'amplitude des phases transitoires en cas d'apparition d'un des réseaux d'alimentation.

En outre, la puissance électrique $P_i$ fournie par un réseau d'alimentation $R_i$ au bus de distribution 16 croît et décroît graduellement et continûment, ce qui minimise les perturbations sur les réseaux d'alimentation $R_i$.

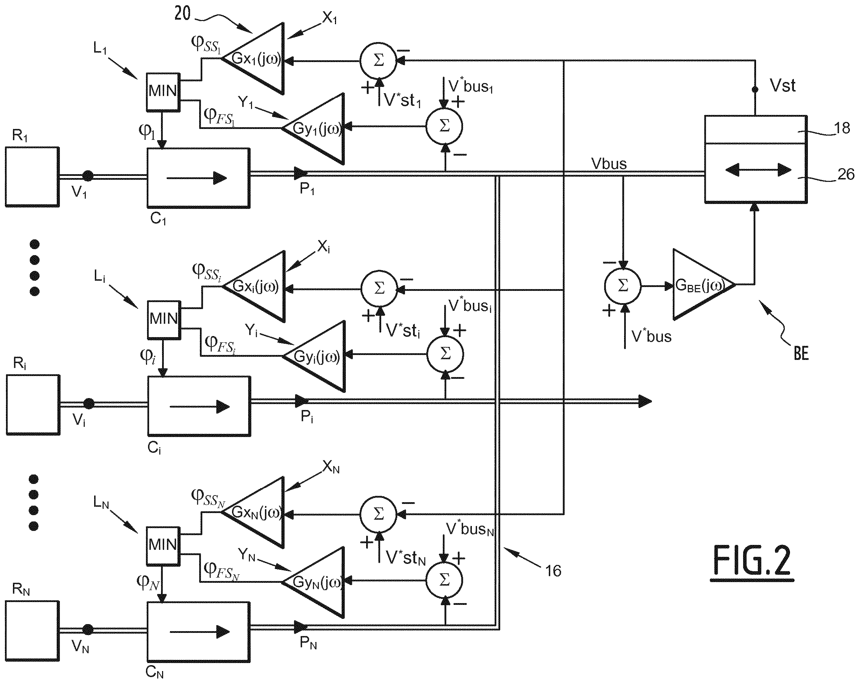

La Figure 2 illustre un second mode de réalisation de l'invention.

Dans ce deuxième mode de réalisation, le système d'alimentation 10 comprend les mêmes organes que précédemment. Ceux-ci ne seront donc pas décrits.

En outre, le système d'alimentation 10 comprend un chargeur bidirectionnel 26.

Les moyens de commande 20 comprennent N boucles de régulation de distribution désignées par les références $Y_1$, ..., $Y_N$ et une boucle de régulation de chargeur BE propre à piloter le chargeur 26 pour l'asservissement de la tension de distribution $V_{BUS}$ à la tension de distribution de référence $V^*_{BUS}$.

Par ailleurs, les moyens de commande 20 comprennent N blocs de contrôle $L_1$, ..., $L_N$ respectivement raccordés en entrée à une boucle de régulation de stockage $X_i$ et à une boucle de régulation de distribution $Y_i$, et en sortie au convertisseur unidirectionnel $C_i$ correspondant.

Le chargeur 26 est raccordé d'une part au bus de distribution 16 et d'autre part au dispositif de stockage d'énergie 18. Il est propre à prélever de la puissance électrique sur le bus de distribution 16 et à la délivrer au dispositif de stockage d'énergie 18, et inversement.

Le chargeur 26 est par exemple réalisé par un convertisseur abaisseur de tension contrôlé de façon synchrone ou encore un convertisseur abaisseur/élévateur de tension à inductance commune.

Les N boucles de régulation de distribution $Y_i$ sont propres à commander la puissance électrique $P_i$ délivrée par les convertisseurs unidirectionnels $C_i$ au bus de distribution 16 en fonction de la tension de distribution $V_{BUS}$. Cette commande est réalisée par chaque boucle de régulation de distribution $Y_i$ via une deuxième variable de contrôle $\varphi_{FS1}$, ..., $\varphi_{FSN}$.

Plus particulièrement, les boucles de régulation de distribution $Y_i$ sont propres à commander les convertisseurs unidirectionnels $C_i$ pour la limitation de la tension de distribution $V_{BUS}$.

A cet effet, à chaque boucle de régulation de distribution $Y_i$ est associée une tension de distribution locale $V^*_{BUSi}$ telle que si la tension de distribution $V_{BUS}$ dépasse la tension de distribution locale $V^*_{BUSi}$, la boucle de régulation de distribution $Y_i$ correspondante commande la limitation de la puissance électrique Pi fournie par le convertisseur correspondant, ce qui tend en retour à limiter la tension de distribution $V_{BUS}$.

Les tensions de distribution locales $V^*_{BUS1}$, ..., $V^*_{BUSN}$ sont strictement décroissantes et supérieures à la tension de distribution de référence $V^*_{BUS}$ de la boucle de régulation de chargeur BE.

Lorsque la tension de distribution $V_{BUS}$ est supérieure à $V^*_{BUS}$, ce qui se produit notamment lorsque plusieurs convertisseurs unidirectionnels $C_i$ transfèrent une puissance électrique non nulle au bus de distribution 16, la puissance électrique $P_i$ issue du réseau d'alimentation $R_i$ prioritaire parmi ces réseaux d'alimentation est ainsi prioritairement transférée au bus de distribution 16.

Chaque bloc de contrôle $L_i$ est propre à limiter la puissance électrique $P_i$ délivrée par le convertisseur unidirectionnel $C_i$ correspondant par la sélection du minimum entre la première variable de contrôle $\varphi_{SSi}$ de la boucle de régulation de stockage $X_i$ et la deuxième variable de contrôle $\varphi_{FSi}$ de la boucle de régulation de distribution $Y_i$.

En variante, les boucles de régulation de distri-

bution $Y_i$ sont propres à commander les convertisseurs unidirectionnels $C_i$ pour la limitation d'un courant de distribution $I_{BUS}$ qu'ils fournissent au bus de distribution 16.

Le fonctionnement du système d'alimentation 10 selon le deuxième mode de réalisation découle du fonctionnement de l'invention selon le premier mode de réalisation et va maintenant être décrit, toujours en référence à la Figure 4.

Dans ce mode de réalisation, outre les aspects du fonctionnement du système d'alimentation 10 décrits précédemment, le chargeur 26 prélève de la puissance électrique sur le bus de distribution 16 lorsque la tension de distribution $V_{BUS}$ dépasse la tension de distribution de référence $V^*_{BUS}$ et transfère cette puissance électrique au dispositif de stockage d'énergie 18, c'est-à-dire qu'il charge le dispositif de stockage d'énergie 18.

A l'inverse, lorsque la tension de distribution $V_{BUS}$ passe sous sa valeur de référence $V^*_{BUS}$, le chargeur 26 compense en déchargeant le dispositif de stockage d'énergie 18 de façon à introduire un surplus d'énergie électrique sur le bus de distribution 16, ce qui tend à faire augmenter la tension de distribution $V_{BUS}$.

En référence à la Figure 4, dans une région associée à un réseau d'alimentation $R_i$, lorsqu'un réseau d'alimentation $R_j$ prioritaire réapparaît (j entier inférieur à i), la saturation de la boucle de régulation de stockage $X_j$ se traduit par une augmentation rapide de la tension de distribution $V_{BUS}$ Afin de prévenir ces excursions de la tension de distribution $V_{BUS}$ sur le bus de distribution 16 qui peuvent nuire aux équipements électroniques aval, le bloc de contrôle $L_j$ du convertisseur unidirectionnel $C_i$ limite la puissance électrique $P_i$ qu'il délivre en procédant comme décrit ci-dessus.

Les blocs de contrôle $L_i$ garantissent ainsi que la tension de distribution $V_{BUS}$ demeure sous la tension de distribution maximale $V_{BUS\_MAX}$.

Il est à noter que les vitesses des boucles de régulation de distribution $Y_i$ sont supérieures aux vitesses des boucles de régulation de stockage $X_i$ correspondantes.

Ce mode de réalisation est donc avantageusement utilisé pour limiter la tension de distribution $V_{BUS}$.

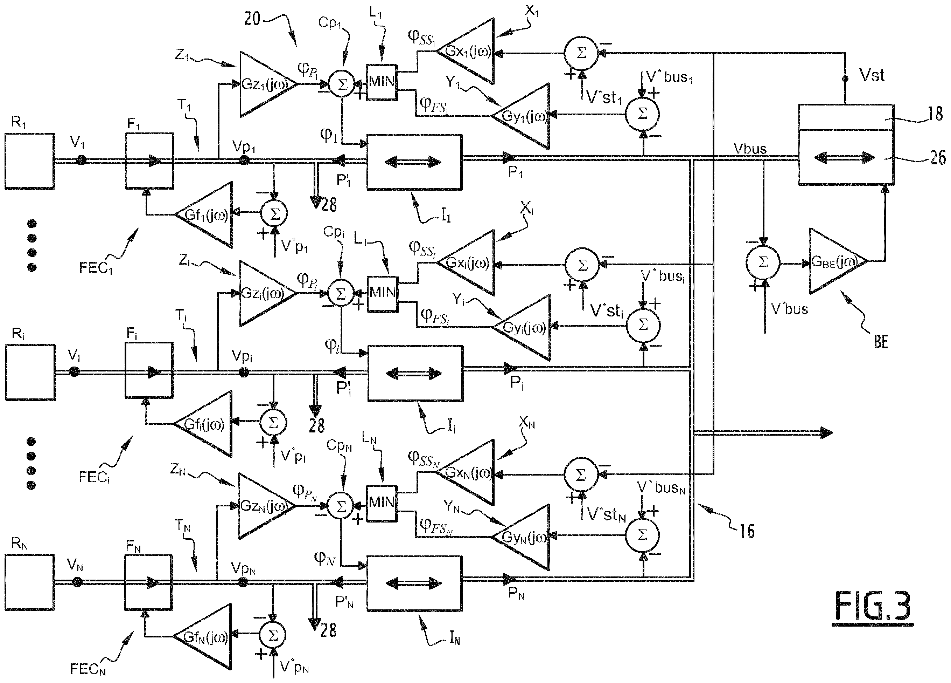

La Figure 3 illustre un troisième de mode de réalisation de l'invention, dans lequel le système d'alimentation 10 comprend les mêmes organes que dans le second mode de réalisation, et par conséquent ces organes ne seront pas décrits à nouveau.

Dans ce troisième mode de réalisation, chaque convertisseur unidirectionnel $C_1$, ..., $C_N$ associé à un réseau d'alimentation donné comprend :

- un réseau intermédiaire $T_1$, ..., $T_N$,

- un convertisseur primaire unidirectionnel $F_1$, ..., $F_N$, et

- un isolateur bidirectionnel $I_1$, ..., $I_N$.

En outre, les moyens de commande 20 comprennent N boucles à réaction positive $Z_1$, ..., $Z_N$. Chaque boucle à réaction positive $Z_i$ est respectivement associée à un isolateur bidirectionnel $I_i$ donné.

Les convertisseurs primaires unidirectionnels $F_i$, ci-après convertisseurs primaires $F_i$, sont propres à empêcher les transferts d'énergie électrique entre le réseau d'alimentation $R_i$ auquel ils sont respectivement associés et les autres réseaux d'alimentation.

Chaque convertisseur primaire $F_i$ est raccordé en entrée au réseau d'alimentation $R_i$ correspondant et est propre à délivrer au réseau intermédiaire $T_i$ correspondant une tension intermédiaire $V_{Pi}$ régulée à une tension intermédiaire prescrite $V^*_{Pi}$, à partir de la tension d'entrée $V_i$ dudit réseau d'alimentation. Chaque convertisseur primaire $F_i$ est alors piloté par une boucle de régulation primaire $FEC_i$ pour ce faire.

Les convertisseurs primaires $F_i$ comprennent des moyens de redressement du courant, des moyens de filtrage de la tension d'entrée $V_i$ en mode commun et en mode différentiel, ainsi que des moyens de protection contre les surtensions et de moyens de protection contre la foudre.

Les convertisseurs primaires $F_i$ sont par exemple de type abaisseur / élévateur de tension à inductance commune lorsque le courant fournit par le réseau d'alimentation correspondant est continu et que la tension d'entrée $V_i$ vaut 28 V ou 270 V, et sont par exemple de type Boost PFC lorsque le courant fourni est alternatif et la tension d'entrée $V_i$ vaut 115 V ou 230 V.

Les isolateurs bidirectionnels $I_i$, ci-après isolateurs $I_i$, sont propres à permettre le transfert bidirectionnel d'énergie électrique entre le réseau intermédiaire $T_i$ associé et le bus de distribution 16. En outre, les isolateurs $I_i$ sont propres à isoler galvaniquement le réseau d'alimentation $R_i$ auquel le convertisseur unidirectionnel $C_i$ dont ils font partie est associé des autres réseaux d'alimentation $R_i$ et à alimenter des équipements auxiliaires primaires (non représentés).

Chaque isolateur $I_i$ est raccordé en entrée à un réseau intermédiaire $T_i$ et en sortie au bus de distribution 16. Via une sortie 28, le réseau intermédiaire $T_i$ permet d'alimenter des équipements auxiliaires (non représentés) et des circuits auxiliaires (non représentés) auxquels il délivre un courant de polarisation pour leur fonctionnement.

Chaque boucle à réaction positive $Z_i$ est associée à un isolateur $I_i$ donné et est propre à commander ledit isolateur $I_i$ pour la régulation de la puissance électrique $P_i$ que cet isolateur délivre en fonction de la tension intermédiaire $V_{Pi}$. Cette commande est réalisée via une troisième variable de commande $\varphi_{P1}$, ..., $\varphi_{PN}$.

En outre, chaque boucle à réaction positive $Z_i$ est propre à commander l'isolateur $I_i$ pour la régulation d'une puissance électrique $P'_i$ transférée par l'isolateur $I_i$ au bus intermédiaire $T_i$ associé depuis le bus de distribution 16.

La puissance électrique $P'_i$ est utilisée pour l'alimentation d'équipements électroniques via leur raccord à un bus intermédiaire $T_i$ dont l'isolateur $I_i$ est couramment commandé pour ne pas transférer de puissance électrique $P_i$ à destination du bus de distribution 16.

Dans l'exemple de la Figure 3, ceci permet par exemple d'alimenter ainsi un équipement électronique à partir du bus intermédiaire $T_2$ du convertisseur unidirectionnel $C_2$, qui est par ailleurs commandé par la boucle de régulation de stockage $X_2$ pour délivrer au bus de distribution 16 une puissance électrique nulle $P_2$ lors du fonctionnement nominal du système d'alimentation 10.

Les isolateurs $I_i$ sont par exemple réalisés par des convertisseurs de type Dual Active Bridge, qui provient de l'anglais et signifie Pont Actif Dual, ou encore par des convertisseurs de type Load-Resonant (LRC), qui provient de l'anglais et signifie convertisseur à résonance. Ils sont par exemple munis de dispositifs de type Active Secondary Rectifier, qui provient de l'anglais et signifie redresseur secondaire actif.

Comme illustré sur la Figure 3, la régulation de la puissance électrique $P_i$ délivrée par chaque convertisseur unidirectionnel $C_i$ au bus de distribution 16 est réalisée via la commande des isolateurs $I_1$, ..., $I_N$. La commande de chaque isolateur $I_i$ est réalisée :

- par la boucle de régulation de stockage $X_i$ associée en fonction de la tension de stockage $V_{ST}$,
- par la boucle de régulation de distribution $Y_i$ associée en fonction de la tension de distribution $V_{BUS}$, et
- par la boucle à réaction positive $Z_i$ associée en fonction de la tension intermédiaire $V_{Pi}$ du bus intermédiaire $T_i$ correspondant.

Dans ce troisième mode de réalisation, le bloc de contrôle $L_i$ et la boucle à réaction positive $Z_i$ associés à un convertisseur unidirectionnel $C_i$ donné sont alors raccordées en sortie à un soustracteur $CP_i$ propre à commander l'isolateur $I_i$ pour un transfert de puissance électrique $P_i$ en fonction des trois variables de contrôle $\varphi_{SSi}$, $\varphi_{FSi}$ et $\varphi_{Pi}$.

La puissance électrique $P_i$ délivrée par chaque convertisseur unidirectionnel $C_i$ au bus de distribution 16 est proportionnelle à la différence entre d'une part le minimum de la première variable de contrôle $\varphi_{SSi}$ et la deuxième variable de contrôle $\varphi_{FSi}$, et d'autre part la troisième variable de contrôle $\varphi_{Pi}$, c'est à dire que :

$$P_i \propto \min(\ \varphi_{SSi}\ ;\ \varphi_{FSi}\ )\ -\ \varphi_{Pi}\ .$$

Il convient de noter que la boucle de régulation de stockage $X_i$ de chaque convertisseur unidirectionnel $C_i$ est la seule boucle de régulation propre à commander la puissance électrique $P_i$ délivrée par ledit isolateur $I_i$ à la hausse, la boucle de régulation de distribution $Y_i$ et la boucle à réaction positive $Z_i$ étant propre à limiter cette puissance électrique $P_i$.

Le fonctionnement du système d'alimentation 10 selon le troisième mode de réalisation de l'invention découle du fonctionnement du système 10 selon le deuxième mode de réalisation et va maintenant être décrit en référence aux Figures 3, 4 et 5.

Outre les aspects du fonctionnement du système 10 selon le deuxième mode de réalisation décrits précédemment, lors du fonctionnement du système d'alimentation 10 dans une région associée à un réseau d'alimentation $R_i$ donné, il arrive que la tension d'entrée $V_i$ délivrée par le réseau d'alimentation $R_i$ correspondant diminue temporairement. Un tel phénomène porte le nom de Brown-out, qui provient de l'anglais et signifie baisse de tension.

Cette baisse de tension se traduit par une diminution de la tension intermédiaire $V_{Pi}$ correspondante.

En l'absence d'informations portant sur cette baisse de tension d'entrée $V_i$, les boucles de régulation de stockage $X_i$ et de distribution $Y_i$ commandent l'isolateur $I_i$ correspondant pour transférer la même puissance électrique $P_i$ du réseau intermédiaire $T_i$ au bus de distribution 16, ce qui peut causer une disparition de la tension intermédiaire $V_{Pi}$.

La boucle à réaction positive $Z_i$ du réseau d'alimentation $R_i$ considéré commande alors l'isolateur $I_i$ via l'augmentation de la troisième variable de contrôle $\varphi_{Pi}$ pour que la puissance électrique $P_i$ fournie au bus de distribution 16 diminue.

Les équipements électroniques sont alors alimentés via à la fois le réseau d'alimentation $R_i$ dont le fonctionnement est dégradé et le dispositif de stockage d'énergie 18, et ce tant que la tension de stockage demeure dans la plage de tensions $[V_{STi}; V^*_{STi}]$.

Lorsque la tension de stockage se situe dans une plage de valeurs $[V_{STi}; V^*_{STi}]$ correspondant à un réseau d'alimentation $R_i$, la tension intermédiaire $V_{Pk}$ vue par chaque convertisseur primaire $F_k$ associé à un réseau d'alimentation $R_k$ de moindre priorité que le réseau d'alimentation $R_i$ est supérieure à la tension intermédiaire prescrite $V^*_{Pk}$, et ce du fait de la bidirectionnalité des isolateurs $I_k$, avec k entier supérieur à i,.

En effet, la tension de distribution $V_{BUS}$ est vue par le convertisseur primaire $F_k$ moyennant un coefficient de transformation et l'action de la boucle à réaction positive $Z_k$ correspondante, de telle sorte que la tension intermédiaire $V_{Pk}$ est maintenue au dessus de la tension intermédiaire prescrite $V^*_{Pk}$.

Dès lors, les convertisseurs primaires $F_i$ associés sont commandés par leur boucle de régulation primaire $FEC_k$ pour un transfert de puissance électrique nul depuis le réseau d'alimentation $R_k$ vers le réseau intermédiaire $T_k$ correspondant.

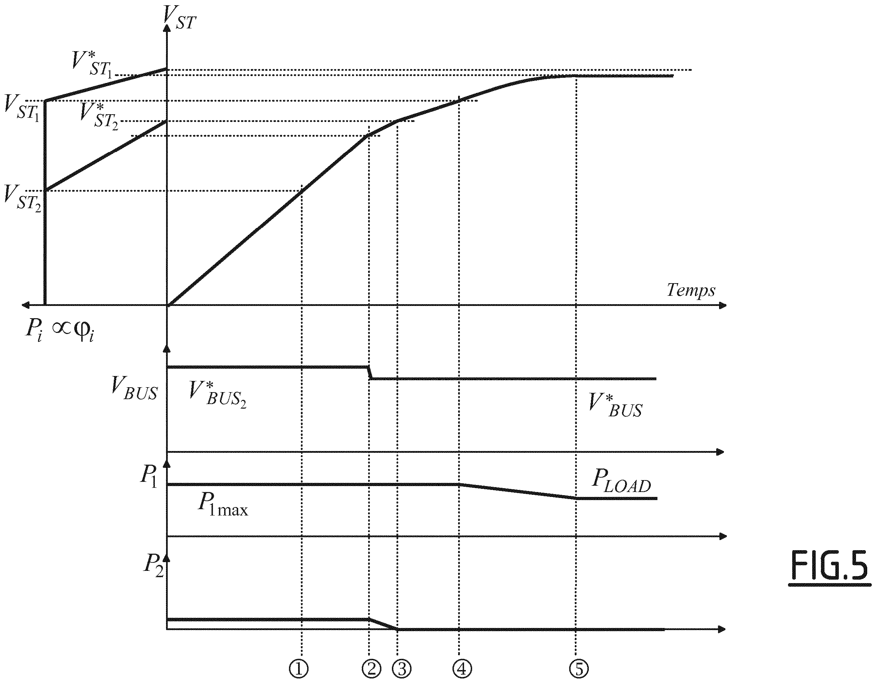

La Figure 5 est une illustration des variations de la tension de stockage $V_{ST}$, de la tension de distribution $V_{BUS}$ et des puissances électriques $P_1$ et $P_2$ en fonction du temps lors du démarrage d'un système d'alimentation 10 selon le troisième mode de réalisation de l'invention dans le cas où il est raccordé en entrée à deux

réseaux d'alimentation R$_1$, R$_2$ (N=2). Dans l'exemple de la Figure 5, l'apparition des réseaux d'alimentation R$_i$ est simultanée.

Jusqu'à l'instant ①, les boucles de régulation de stockage X$_i$ sont saturées. Le convertisseur unidirectionnel C$_1$ fournit sa puissance maximale, alors que le convertisseur C$_2$ fournit une puissance limitée par la boucle de régulation de distribution Y$_2$. La tension de distribution V$_{BUS}$ est donc régulée à la tension de distribution locale V$_{BUS2}$*.

Jusqu'a l'instant ②, la puissance transférée au bus de distribution 16 par les deux convertisseurs C$_1$ et C$_2$ est limitée par la capacité du chargeur 26 à absorber de l'énergie électrique. La puissance fournie par le convertisseur C$_2$ est utilisée pour charger le dispositif de stockage 18 plus rapidement, et elle est significativement plus petite que la puissance nominale du convertisseur unidirectionnel C$_2$.

Après l'instant ②, la boucle de régulation de stockage X$_2$ commence de se dé-saturer. La puissance fournie par le convertisseur C$_2$ diminue graduellement. La tension de distribution V$_{BUS}$ converge rapidement vers la référence V$_{BUS}$* définie par la boucle BE.

A l'instant ③, le convertisseur C$_2$ est contrôlé pour une puissance P$_2$ transférée nulle. Le convertisseur C$_1$ continue de fournir sa puissance maximale, alimentant à la fois la charge aval et augmentant la tension de stockage V$_{ST}$.

A l'instant ④, la tension du stockage V$_{ST}$ vaut V$_{ST1}$ et la boucle de régulation de stockage X$_1$ commence à se dé-saturer. La puissance électrique P$_1$ fournie par le convertisseur C$_1$ converge vers la puissance de charge P$_{LOAD}$ consommée par la charge.

A l'instant ⑤, le système est équilibré et le convertisseur C$_1$ fournit une puissance électrique P$_1$ égale à la puissance de charge P$_{LOAD}$ consommée par la charge.

En variante, le dispositif de stockage d'énergie 18 est un dispositif de stockage inductif traversé par un courant de stockage I$_{ST}$ représentatif d'une quantité d'énergie électrique E qu'il contient.

Dans cette variante, les moyens de commande 20 sont propres à commander simultanément les convertisseurs unidirectionnels C$_i$ pour la régulation de la puissance électrique P$_i$ délivrée par chacun desdits convertisseurs unidirectionnels 14 en fonction du courant de stockage I$_{ST}$.

**Revendications**

1. Système d'alimentation propre à être raccordé en entrée à N réseaux d'alimentation (R$_1$, ..., R$_N$) distincts délivrant une tension d'entrée (V$_1$, ..., V$_N$) continue ou alternative et à délivrer une tension de distribution (V$_{BUS}$) continue, N étant un nombre entier supérieur ou égal à 2, du type comportant un bus de distribution (16) fonctionnant sous la tension de distribution (V$_{BUS}$), N convertisseurs unidirectionnels (C$_1$, ..., C$_N$) propres à être respectivement raccordés en entrée à un réseau d'alimentation (R$_1$, ..., R$_N$) donné et propres à délivrer au bus de distribution (16) une puissance électrique (P$_1$, ..., P$_N$), et des moyens de commande (20) propres à commander les convertisseurs unidirectionnels (C$_1$, ..., C$_N$),
le système d'alimentation (10) comprenant également un dispositif de stockage d'énergie (18) capacitif raccordé au bus de distribution (16) et comprenant une quantité d'énergie (E),
**caractérisé en ce que** le dispositif de stockage capacitif fonctionne sous une tension de stockage (V$_{ST}$) représentative de la quantité d'énergie (E),
et **en ce que** les moyens de commande (20) sont propres à commander simultanément les convertisseurs unidirectionnels (C$_1$, ..., C$_N$) pour la régulation de la puissance électrique (P$_1$, ..., P$_N$) délivrée par chacun desdits convertisseurs unidirectionnels (C$_1$, ..., C$_N$) en fonction de ladite tension de stockage (V$_{ST}$),
des seuils de tension de stockage (V$_{ST1}$, ..., V$_{STN}$) décroissants étant associés aux réseaux d'alimentation (R$_1$, ..., R$_N$) et définissant un ordre de priorité entre lesdits réseaux d'alimentation (R$_1$, ..., R$_N$) tel qu'un premier réseau d'alimentation (R$_1$, ..., R$_N$) dont le seuil de tension de stockage (V$_{ST1}$, ..., V$_{STN}$) est supérieur au seuil de tension de stockage (V$_{ST1}$, ..., V$_{STN}$) d'un deuxième réseau d'alimentation (R$_1$, ..., R$_N$) est prioritaire par rapport audit deuxième réseau d'alimentation (R$_1$, ..., R$_N$).

2. Système d'alimentation selon la revendication 1, **caractérisé en ce que** les moyens de commande (20) comportent N boucles de régulation de stockage (X$_1$, ..., X$_N$ respectivement associées à un convertisseur unidirectionnel (C$_1$, ..., C$_N$) et propres à réguler la puissance électrique (P$_1$, ..., P$_N$) délivrée par ledit convertisseur unidirectionnel (C$_1$, ..., C$_N$) au bus de distribution (16), chaque boucle de régulation de stockage (X$_1$, ..., X$_N$) comportant une caractéristique de contrôle (23) à réduction progressive (24) au-delà du seuil de tension (V$_{ST1}$, ..., V$_{STN}$) associé au réseau d'alimentation (R$_1$, ..., R$_N$) correspondant, la pente de ladite réduction progressive (24) correspondant au gain statique (G$_i$) de ladite boucle de régulation de stockage (X$_1$, ..., X$_N$).

3. Système d'alimentation selon la revendication 2, **caractérisé en ce que** les réductions progressives (24) des caractéristiques de contrôle (23) des N boucles de régulation de stockage (X$_1$, ..., X$_N$) sont opérées sur des plages de valeurs de la tension de stockage (V$_{ST}$) disjointes les unes des autres.

4. Système d'alimentation selon la revendication 2 ou la revendication 3, **caractérisé en ce que** la valeur maximale ($\varphi_{S\_MAX}$) de la caractéristique de contrôle

(23) d'une boucle de régulation de stockage ($X_1$, ..., $X_N$) est également la valeur maximale des caractéristiques de contrôle (23) des N-1 autres boucles de régulation de stockage ($X_1$, ..., $X_N$).

**5.** Système d'alimentation selon l'une quelconque des revendications 2 à 4, **caractérisé en ce que** les gains statiques ($G_i$) respectifs des N boucles de régulation de stockage ($X_1$, ..., $X_N$) présentent des valeurs décroissantes, le gain statique ($G_1$ ..., $G_N$) d'une boucle de régulation de stockage ($X_1$, ..., $X_N$) dont le convertisseur unidirectionnel ($C_1$, ..., $C_N$) est associé à un premier réseau d'alimentation ($R_1$, ..., $R_N$) étant inférieur au gain statique ($G_1$ ..., $G_N$) des boucles de régulation de stockage ($X_1$, ..., $X_N$) dont le convertisseur unidirectionnel ($C_1$, ..., $C_N$) est associé à un réseau d'alimentation ($R_1$, ..., $R_N$) prioritaire par rapport audit premier réseau d'alimentation ($R_1$, ..., $R_N$).

**6.** Système d'alimentation selon la revendication 5, **caractérisé en ce que** le gain statique ($G_1$ ..., $G_N$) d'une boucle de régulation de stockage ($X_1$, ..., $X_N$) dont le convertisseur unidirectionnel ($C_1$, ..., $C_N$) est associé à un premier réseau d'alimentation ($R_1$, ..., $R_N$) est déterminé par l'équation $G_i = G_{i-1} * V_{STi} / V_{STi-1}$, où $G_i$ est le gain statique ($G_1$ ..., $G_N$) de ladite boucle de régulation de stockage ($X_1$, ..., $X_N$), $V_{STi}$ est le seuil de tension de stockage associé audit premier réseau d'alimentation ($R_1$, ..., $R_N$), $V_{STi-1}$ est le plus petit des seuils de tension de stockage supérieurs au seuil de tension de stockage $V_{STi}$, et $G_{i-1}$ est le gain statique ($G_1$ ..., $G_N$) de la boucle de régulation de stockage ($X_1$, ..., $X_N$) dont le convertisseur unidirectionnel ($C_1$, ..., $C_N$) est associé au réseau d'alimentation ($R_1$, ..., $R_N$) dont le seuil de tension de stockage est $V_{STi-1}$.

**7.** Système d'alimentation selon l'une quelconque des revendications précédentes, **caractérisé en ce que** les moyens de commande (20) comprennent N boucles de régulation de distribution ($Y_1$, ..., $Y_N$) respectivement associées à un convertisseur unidirectionnel donné ($C_1$, ..., $C_N$) et propres à réguler la puissance électrique ($P_1$, ..., $P_N$) délivrée par ledit convertisseur unidirectionnel ($C_1$, ..., $C_N$) au bus de distribution (16) en fonction de la tension de distribution ($V_{BUS}$) pour la limitation de la tension de distribution ($V_{BUS}$) ou pour la limitation d'un courant de distribution ($I_{BUS}$) fourni au bus de distribution (16).

**8.** Système d'alimentation selon l'une quelconque des revendications précédentes, **caractérisé en ce que** chaque convertisseur unidirectionnel ($C_1$, ..., $C_N$) associé à un réseau d'alimentation ($R_1$, ..., $R_N$) donné comprend :

- un réseau intermédiaire ($T_1$, ..., $T_N$),

- un convertisseur primaire unidirectionnel ($F_1$, ..., $F_N$) propre à empêcher les transferts d'énergie électrique entre le réseau d'alimentation ($R_1$, ..., $R_N$) auquel ledit convertisseur unidirectionnel ($C_1$, ..., $C_N$) est associé et les autres réseaux d'alimentation ($R_1$, ..., $R_N$), ledit convertisseur primaire unidirectionnel ($F_1$, ..., $F_N$) étant raccordé en entrée au réseau d'alimentation correspondant ($R_1$, ..., $R_N$) et propre à délivrer au réseau intermédiaire ($T_1$, ..., $T_N$) une tension intermédiaire ($V_{P1}$, ..., $V_{PN}$) régulée à partir de la tension d'entrée ($V_1$, ..., $V_N$) dudit réseau d'alimentation, et

- un isolateur bidirectionnel ($I_1$, ..., $I_N$) propre à isoler galvaniquement ($R_1$, ..., $R_N$) le réseau d'alimentation ($R_1$, ..., $R_N$) auquel ledit convertisseur unidirectionnel ($C_1$, ..., $C_N$) est associé des autres réseaux d'alimentation ($R_1$, ..., $R_N$), ledit isolateur bidirectionnel ($I_1$, ..., $I_N$) étant raccordé en entrée au réseau intermédiaire ($T_1$, ..., $T_N$) et en sortie au bus de distribution (16) et étant propre à être commandé par les moyens de commande (20) pour la régulation de la puissance électrique ($P_1$, ..., $P_N$) délivrée par le convertisseur unidirectionnel ($C_1$, ..., $C_N$) au bus de distribution (16) et pour la régulation d'une puissance électrique ($P'_1$, ..., $P'_N$) en provenance du bus de distribution (16) et délivrée par ledit isolateur bidirectionnel ($I_1$, ..., $I_N$) au réseau intermédiaire ($T_1$, ..., $T_N$) correspondant.

**9.** Système d'alimentation selon la revendication 8, **caractérisé en ce que** les convertisseurs primaires ($F_1$, ..., $F_N$) comprennent des moyens de redressement de la tension, des moyens de filtrage de la tension en mode commun et en mode différentiel, des moyens de protection contre les surtensions et de moyens de protection contre la foudre.

**10.** Système d'alimentation selon la revendication 8 ou 9, **caractérisé en ce que** les moyens de commande (20) comprennent N boucles à réaction positive ($Z_1$, ..., $Z_N$) respectivement associées à un isolateur bidirectionnel ($I_1$, ..., $I_N$) donné et propres à réguler en fonction de la tension intermédiaire ($V_{P1}$, ..., $V_{PN}$) du réseau intermédiaire ($T_1$, ..., $T_N$) correspondant la puissance électrique ($P_1$, ..., $P_N$) délivrée par ledit isolateur bidirectionnel au bus de distribution (16), et donc par le convertisseur unidirectionnel correspondant ($C_1$, ..., $C_N$), au bus de distribution (16) d'une part, et d'autre part, la puissance électrique ($P'_1$, ..., $P'_N$) délivrée par ledit isolateur bidirectionnel ($I_1$, ..., $I_N$) au réseau intermédiaire ($T_1$, ..., $T_N$) correspondant.

**11.** Système d'alimentation selon les revendications 2, 7 et 10, **caractérisé en ce que** pour chaque convertisseur unidirectionnel ($C_1$, ..., $C_N$), la boucle de ré-

gulation de stockage ($X_1$, ..., $X_N$ associée est propre à réguler la puissance électrique ($P_1$, ..., $P_N$) délivrée par ledit convertisseur unidirectionnel ($C_1$, ..., $C_N$) en fonction de la tension de stockage ($V_{ST}$) via une première variable de contrôle ($\varphi_{SS1}$, ..., $\varphi_{SSN}$), la boucle de régulation de distribution ($Y_1$, ..., $Y_N$) associée est propre à réguler la puissance électrique ($P_1$, ..., $P_N$) délivrée par ledit convertisseur unidirectionnel ($C_1$, ..., $C_N$), en fonction de la tension de distribution ($V_{BUS}$) via une deuxième variable de contrôle ($\varphi_{FS1}$, ..., $\varphi_{FSN}$), et la boucle à réaction positive ($Z_1$, ..., $Z_N$) associée est propre à réguler la puissance délivrée par ledit convertisseur unidirectionnel via une troisième variable de contrôle ($\varphi_{P1}$, ..., $\varphi_{PN}$), la puissance délivrée par ledit convertisseur unidirectionnel ($C_1$, ..., $C_N$) au bus de distribution (16) étant proportionnelle à la différence entre d'une part le minimum des première ($\varphi_{SS1}$, ..., $\varphi_{SSN}$) et deuxième ($\varphi_{FS1}$, ..., $\varphi_{FSN}$) variables de contrôle, et d'autre part la troisième variable de contrôle ($\varphi_{P1}$, ..., $\varphi_{PN}$).

12. Système d'alimentation selon l'une quelconque des revendications précédentes, **caractérisé en ce que** le dispositif de stockage d'énergie (18) est raccordé au bus de distribution (16) via un chargeur bidirectionnel (26) propre à réaliser le transfert d'énergie électrique entre le bus de distribution (16) et le dispositif de stockage d'énergie (18).

13. Système d'alimentation selon la revendication 12, **caractérisé en ce que** le dispositif de stockage d'énergie comprend une boucle de régulation de chargeur (BE) propre à commander le chargeur bidirectionnel (26) pour la régulation du transfert d'énergie entre le chargeur bidirectionnel (26) et le bus de distribution (16) pour l'asservissement de la tension de distribution ($V_{BUS}$) à une tension de distribution de référence ($V^*_{BUS}$).

**Patentansprüche**

1. Versorgungssystem, das geeignet ist, eingangsseitig an N unterschiedliche Versorgungsnetze ($R_1$, ..., $R_N$) angeschlossen zu werden, die eine Eingangsgleich- oder-wechselspannung ($V_1$, ..., $V_N$) liefern, und geeignet ist, eine Verteilergleichspannung ($V_{BUS}$) zu liefern, wobei N eine ganze Zahl größer oder gleich 2 ist, der Art, die einen bei der Verteilerspannung ($V_{BUS}$) arbeitenden Verteilerbus (16), N unidirektionale Wandler ($C_1$, ..., $C_N$), die geeignet sind, jeweils eingangsseitig an ein gegebenes Versorgungsnetz ($R_1$, ..., $R_N$) angeschlossen zu werden, und geeignet sind, an den Verteilerbus (16) eine elektrische Leistung ($P_1$, ..., $P_N$) zu liefern, und Steuermittel (20), die geeignet sind, die unidirektionalen Wandler ($C_1$, ..., $C_N$) zu steuern, umfasst, wobei das Versorgungssystem (10) gleichfalls eine kapazitive Energiespeichervorrichtung (18) umfasst, die an den Verteilerbus (16) angeschlossen ist und eine Energiemenge (E) umfasst, **dadurch gekennzeichnet, dass** die kapazitive Speichervorrichtung bei einer für die Energiemenge (E) repräsentative Speicherspannung ($V_{ST}$) arbeitet, und dass die Steuermittel (20) geeignet sind, gleichzeitig die unidirektionalen Wandler ($C_1$, ..., $C_N$) für die Regelung der elektrischen Leistung ($P_1$, ..., $P_N$), die von jedem der unidirektionalen Wandler ($C_1$, ..., $C_N$) abhängig von der Speicherspannung ($V_{ST}$) geliefert wird, zu steuern, wobei abfallende Schwellen der Speicherspannung ($V_{ST1}$, ..., $V_{STN}$) den Versorgungsnetzen ($R_1$, ..., $R_N$) zugeordnet sind, und eine Prioritätsreihenfolge unter den Versorgungsnetzen ($R_1$, ..., $R_N$) definieren, derart, dass ein erstes Versorgungsnetz ($R_1$, ..., $R_N$), dessen Schwelle der Speicherspannung ($V_{ST1}$, ..., $V_{STN}$) größer ist als eine Schwelle der Speicherspannung ($V_{ST1}$, ..., $V_{STN}$) eines zweiten Versorgungsnetzes ($R_1$, ..., $R_N$), zu dem zweiten Versorgungsnetz ($R_1$, ..., $R_N$) vorrangig ist.

2. Versorgungssystem nach Anspruch 1, **dadurch gekennzeichnet, dass** die Steuermittel (20) N Speicherregelkreise ($X_1$, ..., $X_N$) aufweist, die jeweils einem unidirektionalen Wandler ($C_1$, ..., $C_N$) zugeordnet sind und geeignet sind, die von dem unidirektionalen Wandler ($C_1$, ..., $C_N$) an den Verteilerbus (16) gelieferte elektrische Leistung ($P_1$, ..., $P_N$) zu regeln, wobei jeder Speicherregelkreis ($X_1$, ..., $X_N$) eine Regelcharakteristik (23) mit fortschreitender Verringerung (24) über die Spannungsschwelle ($V_{ST1}$, ..., $V_{STN}$) hinaus aufweist, die dem entsprechenden Versorgungsnetz ($R_1$, ..., $R_N$) zugeordnet ist, wobei die Steigung der fortschreitenden Verringerung (24) der statischen Verstärkung ($G_i$) des Speicherregelkreises ($X_1$, ..., $X_N$) entspricht.

3. Versorgungssystem nach Anspruch 2, **dadurch gekennzeichnet, dass** die fortschreitenden Verringerungen (24) der Regelcharakteristiken (23) der N Speicherregelkreise ($X_1$, ..., $X_N$) über Wertebereiche der Speicherspannung ($V_{ST}$), die voneinander getrennt sind, herbeigeführt werden.

4. Versorgungssystem nach Anspruch 2 oder Anspruch 3, **dadurch gekennzeichnet, dass** der Maximalwert ($\varphi_{S\_MAX}$) der Regelcharakteristik (23) eines Speicherregelkreises ($X_1$, ..., $X_N$) gleichfalls der maximale Wert der Regelcharakteristik (23) der N-1 anderen Speicherregelkreise ($X_1$, ..., $X_N$) ist.

5. Versorgungssystem nach einem beliebigen der Ansprüche 2 bis 4, **dadurch gekennzeichnet, dass** die jeweiligen statischen Verstärkungen ($G_i$) der N Speicherregelkreise ($X_1$, ..., $X_N$) abfallende Werte aufweisen, wobei die statische Verstärkung ($G_1$ ...,

$G_N$) eines Speicherregelkreises ($X_1$, ..., $X_N$), dessen unidirektionaler Wandler ($C_1$, ..., $C_N$) einem ersten Versorgungsnetz ($R_1$, ..., $R_N$) zugeordnet ist, kleiner ist als die statische Verstärkung ($G_1$ ..., $G_N$) der Speicherregelkreise ($X_1$, ..., $X_N$), deren unidirektionaler Wandler ($C_1$, ..., $C_N$) einem zu dem ersten Versorgungsnetz ($R_1$, ..., $R_N$) vorrangigen Versorgungsnetz ($R_1$, ..., $R_N$) zugeordnet ist.

6. Versorgungssystem nach Anspruch 5, **dadurch gekennzeichnet, dass** die statische Verstärkung ($G_1$ ..., $G_N$) eines Speicherregelkreises ($X_1$, ..., $X_N$), dessen unidirektionaler Wandler ($C_1$, ..., $C_N$) einem ersten Versorgungsnetz ($R_1$, ..., $R_N$) zugeordnet ist, durch die Gleichung $G_i = G_{i-1} * V_{STi} / V_{STi-1}$ bestimmt ist, wobei $G_i$ die statische Verstärkung ($G_1$ ..., $G_N$) des Speicherregelkreises ($X_1$, ..., $X_N$) ist, $V_{STi}$ die dem ersten Versorgungsnetz ($R_1$, ..., $R_N$) zugeordneten Schwelle der Speicherspannung ist, $V_{STi-1}$ die kleinste der Schwellen der Speicherspannung ist, die größer als die Schwelle der Speicherspannung $V_{STi}$ sind, und $G_{i-1}$ die statische Verstärkung ($G_1$ ..., $G_N$) des Speicherregelkreises ($X_1$, ..., $X_N$) ist, dessen unidirektionaler Wandler ($C_1$, ..., $C_N$) dem Versorgungsnetz ($R_1$, ..., $R_N$) zugeordnet ist, dessen Schwelle der Speicherspannung $V_{STi-1}$ ist.

7. Versorgungssystem nach einem beliebigen der vorhergehenden Ansprüche, **dadurch gekennzeichnet, dass** die Steuermittel (20) N Verteilerregelkreise ($Y_1$, ..., $Y_N$) umfassen, die jeweils einem gegebenen unidirektionalen Wandler ($C_1$, ..., $C_N$) zugeordnet sind, und geeignet sind, die elektrische Leistung ($P_1$, ..., $P_N$) zu regeln, die von dem unidirektionalen Wandler ($C_1$, ..., $C_N$) an den Verteilerbus (16) abhängig von der Verteilerspannung ($V_{BUS}$) für die Begrenzung der Verteilerspannung ($V_{BUS}$) oder für die Begrenzung eines an den Verteilerbus (16) gelieferten Verteilerstroms ($I_{BUS}$) geliefert wird.

8. Versorgungssystem nach einem beliebigen der vorhergehenden Ansprüche, **dadurch gekennzeichnet, dass** jeder unidirektionale Wandler ($C_1$, ..., $C_N$), der einem gegebenen Versorgungsnetz ($R_1$, ..., $R_N$) zugeordnet ist, umfasst:

- ein Zwischennetz ($T_1$, ..., $T_N$),
- einen unidirektionalen Hauptwandler ($F_1$, ..., $F_N$), der geeignet ist, die elektrischen Energieübertragungen zwischen dem Versorgungsnetz ($R_1$, ..., $R_N$), dem der unidirektionale Wandler ($C_1$, ..., $C_N$) zugeordnet ist, und den anderen Versorgungsnetzen ($R_1$, ..., $R_N$) zu verhindern, wobei der unidirektionale Hauptwandler ($F_1$, ..., $F_N$) eingangsseitig an das entsprechende Versorgungsnetz ($R_1$, ..., $R_N$) angeschlossen ist und geeignet ist, an das Zwischennetz ($T_1$, ..., $T_N$) eine Zwischenspannung ($V_{P1}$, ..., $V_{PN}$) zu liefern, die aus der Eingangsspannung ($V_1$, ..., $V_N$) des Versorgungsnetzes geregelt wird, und
- einen bidirektionalen Isolator ($I_1$, ..., $I_N$), der geeignet ist, das Versorgungsnetz ($R_1$, ..., $R_N$), dem der unidirektionale Wandler ($C_1$, ..., $C_N$) zugeordnet ist, galvanisch von den anderen Versorgungsnetzen ($R_1$, ..., $R_N$) zu trennen, wobei der bidirektionale Isolator eingangsseitig an das Zwischennetz ($T_1$, ..., $T_N$) und ausgangsseitig an dem Verteilerbus (16) angeschlossen ist und geeignet ist, von den Steuermitteln (20) für die Regelung der von dem unidirektionalen Wandler ($C_1$, ..., $C_N$) an den Verteilerbus (16) gelieferten elektrischen Leistung ($P_1$, ..., $P_N$) und für die Regelung einer von dem Verteilerbus (16) kommenden und von dem bidirektionalen Isolator ($I_1$, ..., $I_N$) an das entsprechende Zwischennetz ($T_1$, ..., $T_N$) gelieferten elektrischen Leistung ($P'_1$, ..., $P'_N$) gesteuert zu werden.

9. Versorgungssystem nach Anspruch 8, **dadurch gekennzeichnet, dass** die Hauptwandler ($F_1$, ..., $F_N$) Mittel zur Gleichrichtung der Spannung, Mittel zum Filtern der Spannung im Gleichtakt und im Differenzmodus, Mittel zum Überspannungsschutz und Mittel zum Blitzschutz umfasst.

10. Versorgungssystem nach Anspruch oder 9, **dadurch gekennzeichnet, dass** die Steuermittel (20) N positive Rückkopplungskreise ($Z_1$, ..., $Z_N$) umfassen, die jeweils einem gegebenen bidirektionalen Isolator ($I_1$, ..., $I_N$) zugeordnet sind und geeignet sind, abhängig von der Zwischenspannung ($V_{P1}$, ..., $V_{PN}$) des entsprechenden Zwischennetzes ($T_1$, ..., $T_N$) die elektrische Leistung ($P_1$, ..., $P_N$) zu regeln, die von dem bidirektionalen Isolator an den Verteilerbus (16) und somit von dem entsprechenden unidirektionalen Wandler ($C_1$, ..., $C_N$) an den Verteilerbus (16) geliefert wird, einerseits, und andererseits die elektrische Leistung ($P'_1$, ..., $P'_N$) zu regeln, die von dem bidirektionalen Isolator ($I_1$, ..., $I_N$) an das entsprechende Zwischennetz ($T_1$, ..., $T_N$) geliefert wird.

11. Versorgungssystem nach den Ansprüchen 2, 7 und 10, **dadurch gekennzeichnet, dass** für jeden unidirektionalen Wandler ($C_1$, ..., $C_N$) der zugeordnete Speicherregelkreis ($X_1$, ..., $X_N$) geeignet ist, die von dem unidirektionalen Wandler ($C_1$, ..., $C_N$) abhängig von der Speicherspannung ($V_{ST}$) über eine erste Steuervariable ($\varphi_{SS1}$, ..., $\varphi_{SSN}$) gelieferte elektrische Leistung ($P_1$, ..., $P_N$) zu regeln, der zugeordnete Verteilerregelkreis ($Y_1$, ..., $Y_N$) geeignet ist, die von dem unidirektionalen Wandler ($C_1$, ..., $C_N$) abhängig von der Verteilerspannung ($V_{BUS}$) über eine zweite Steuervariable ($\varphi_{FS1}$, ..., $\varphi_{FSN}$) gelieferte elektrische Leistung ($P_1$, ..., $P_N$) zu regeln, und der zugeordnete positive Rückkopplungskreis ($Z_1$, ..., $Z_N$) geeignet

ist, die von dem unidirektionalen Wandler über eine dritte Steuervariable ($\varphi_{P1}$, ..., $\varphi_{PN}$) gelieferte Leistung zu steuern, wobei die von dem unidirektionalen Wandler ($C_1$, ..., $C_N$) an den Verteilerbus (16) gelieferte Leistung proportional zur Differenz zwischen einerseits dem Minimum der ersten ($\varphi_{SS1}$, ..., $\varphi_{SSN}$) und zweiten ($\varphi_{FS1}$, ..., $\varphi_{FSN}$) Steuervariablen und andererseits der dritten Steuervariablen ($\varphi_{P1}$, ..., $\varphi_{PN}$) ist.

12. Versorgungssystem nach einem beliebigen der vorhergehenden Ansprüche, **dadurch gekennzeichnet, dass** die Energiespeichervorrichtung (18) an den Verteilerbus (16) über eine bidirektionale Ladevorrichtung (26) angeschlossen ist, die geeignet ist, die elektrische Energieübertragung zwischen dem Verteilerbus (16) und der Energiespeichervorrichtung (18) zu realisieren.

13. Versorgungssystem nach Anspruch 12, **dadurch gekennzeichnet, dass** die Energiespeichervorrichtung einen Ladungsregelkreis (BE) umfasst, der geeignet ist, die bidirektionale Ladevorrichtung (26) für die Regelung der Energieübertragung zwischen der bidirektionalen Ladevorrichtung (26) und dem Verteilerbus (16) für die Regelung der Verteilerspannung ($V_{BUS}$) auf eine Referenzverteilerspannung ($V^*_{BUS}$) zu steuern.

**Claims**

1. A power supply system adapted to be connected in input to N distinct power supply grids ($R_1$, ..., $R_N$) delivering a direct or alternating input voltage ($V_1$, ..., $V_N$), and to deliver a direct distribution voltage ($V_{BUS}$), N being an integer greater than or equal to 2, of the type comprising:

   - a distribution bus (16) operating under the distribution voltage ($V_{BUS}$),
   - N unidirectional converters ($C_1$, ..., $C_N$) adapted to be respectively connected in input to a given power grid ($R_1$, ..., $R_N$) and adapted to deliver an electrical power ($P_1$, ..., $P_N$) to the distribution bus (16), and
   - control means (20) adapted to control the unidirectional converters ($C_1$, ..., $C_N$), the power supply system (10) also comprising a capacitive energy storage device (18) connected to the distribution bus (16) and having a quantity of energy (E),

   **characterized in that** the capacitive storage device operates under a storage voltage ($V_{ST}$) representative of the quantity of energy (E), and **in that** the control means (20) are adapted to control the unidirectional converters ($C_1$, ..., $C_N$) simultaneously to regulate the electrical power ($P_1$, ..., $P_N$) delivered by each of said unidirectional converters ($C_1$, ..., $C_N$) as a function of said storage voltage ($V_{ST}$), decreasing storage voltage thresholds ($V_{ST1}$, ..., $V_{STN}$) being associated with the power supply grids ($R_1$, ..., $R_N$) and defining a priority order between said power supply grids ($R_1$, ..., $R_N$) such that a first power supply grid ($R_1$, ..., $R_N$) whereof the storage voltage threshold ($V_{ST1}$, ..., $V_{STN}$) is higher than the storage voltage threshold ($V_{ST1}$, ..., $V_{STN}$) of a second power supply grid ($R_1$, ..., $R_N$), is given a higher priority relative to said second power supply grid ($R_1$, ..., $R_N$).

2. The power supply system according to claim 1, **characterized in that** the control means (20) comprise N storage regulating loops ($X_1$, ..., $X_N$) respectively associated with a unidirectional converter ($C_1$, ..., $C_N$) and capable of regulating the electrical power ($P_1$, ..., $P_N$) delivered by said unidirectional converter ($C_1$, ..., $C_N$) to the distribution bus (16), each storage regulating loop ($X_1$, ..., $X_N$) comprising a progressive reduction (24) control characteristic (23) beyond the voltage threshold ($V_{ST1}$, ..., $V_{STN}$) associated with the corresponding power supply grid ($R_1$, ..., $R_N$), the slope of said progressive reduction (24) corresponding to the static gain ($G_i$) of said storage regulating loop ($X_1$, ..., $X_N$).

3. The power supply system according to claim 2, **characterized in that** the progressive reductions (24) of the control characteristics (23) of the N storage regulating loops ($X_1$, ..., $X_N$) are done over value ranges of the storage voltage ($V_{ST}$) that are disjoint from one another.

4. The power supply system according to claim 2 or claim 3, **characterized in that** the maximum value ($\varphi_{S\_MAX}$) of the control characteristic (23) of a storage regulating loop ($X_1$, ..., $X_N$) is also the maximum value of the control characteristics (23) of the N-1 other storage regulating loops ($X_1$, ..., $X_N$).

5. The power supply system according to any one of claims 2 to 4, **characterized in that** the respective static gains ($G_i$) of the N storage regulating loops ($X_1$, ..., $X_N$) have decreasing values, the static gain ($G_1$ ..., $G_N$) of a storage regulating loop ($X_1$, ..., $X_N$) whereof the unidirectional converter ($C_1$, ..., $C_N$) is associated with a first power supply grid ($R_1$, ..., $R_N$) being smaller than the static gain ($G_1$ ..., $G_N$) of the storage regulating loop ($X_1$, ..., $X_N$) whereof the unidirectional converter ($C_1$, ..., $C_N$) is associated with a power supply grid ($R_1$, ..., $R_N$) with a higher priority relative to said first power supply grid ($R_1$, ..., $R_N$).

6. The power supply system according to claim 5, **char-**

**acterized in that** the static gain ($G_1$ ..., $G_N$) of a storage regulating loop ($X_1$, ..., $X_N$) whereof the unidirectional converter ($C_1$, ..., $C_N$) is associated with a first power supply grid ($R_1$, ..., $R_N$) is determined by the equation $G_i = G_{i-1} * V_{STi} / V_{Sti-1}$, where $G_i$ is the static gain ($G_1$ ..., $G_N$) of said storage regulating loop ($X_1$, ..., $X_N$), $V_{STi}$ is the storage voltage threshold associated with said first power supply grid ($R_1$, ..., $R_N$), $V_{STi-1}$ is the smallest of the storage voltage thresholds higher than the storage voltage threshold $V_{STi}$, and $G_{i-1}$ is the static gain ($G_1$ ..., $G_N$) of the storage regulating loop ($X_1$, ..., $X_N$) whereof the unidirectional converter ($C_1$, ..., $C_N$) is associated with the power supply grid ($R_1$, ..., $R_N$) whereof the storage voltage threshold is $V_{STi-1}$.

7. The power supply system according to any one of the preceding claims, **characterized in that** the control means (20) have N distribution regulating loops ($Y_1$, ..., $Y_N$) respectively associated with a given unidirectional converter ($C_1$, ..., $C_N$) and capable of regulating the electrical power ($P_1$, ..., $P_N$) delivered by said unidirectional ($C_1$, ..., $C_N$) converter to the distribution bus (16) as a function of the distribution voltage ($V_{BUS}$) to limit the distribution voltage ($V_{BUS}$) or to limit a distribution current ($I_{BUS}$) supplied to the distribution bus (16).

8. The power supply system according to any one of the preceding claims, **characterized in that** each unidirectional converter ($C_1$, ..., $C_N$) associated with a given power supply grid ($R_1$, ..., $R_N$) has:

    - an intermediate grid ($T_1$, ..., $T_N$),
    - a unidirectional primary converter ($F_1$, ..., $F_N$) capable of preventing electrical power transfers between the power supply grid ($R_1$, ..., $R_N$) with which said unidirectional converter ($C_1$, ..., $C_N$) is associated and the other power supply grids ($R_1$, ..., $R_N$), said unidirectional primary converter ($F_1$, ..., $F_N$) being connected in input to the corresponding power supply grid ($R_1$, ..., $R_N$) and capable of delivering to the intermediate grid ($T_1$, ..., $T_N$) a regulated intermediate voltage ($V_{P1}$, ..., $V_{PN}$) from the input voltage ($V_1$, ..., $V_N$) of said power supply grid, and
    - a bidirectional insulator ($I_1$, ..., $I_N$) capable of galvanically insulating the power supply grid ($R_1$, ..., $R_N$) with which said unidirectional converter ($C_1$, ..., $C_N$) is associated from the other power supply grids ($R_1$, ..., $R_N$), said bidirectional insulator ($I_1$, ..., $I_N$) being connected in input to the intermediate grid ($T_1$, ..., $T_N$) and at its output to the distribution bus (16), and being capable of being controlled by the control means (20) to regulate the electrical power ($P_1$, ..., $P_N$) delivered by the unidirectional converter ($C_1$, ..., $C_N$) to the distribution bus (16) and to regulate electrical power ($P'_1$, ..., $P'_N$) coming from the distribution bus (16) and delivered by said bidirectional insulator ($I_1$, ..., $I_N$) to the corresponding intermediate grid ($T_1$, ..., $T_N$).

9. The power supply system according to claim 8, **characterized in that** the primary converters ($F_1$, ..., $F_N$) include rectifier means for the voltage, filtering means for the voltage in common mode and differential mode, protection means against overvoltages, and protection means against lightning.

10. The power supply system according to claim 8 or 9, **characterized in that** the control means (20) have N positive reaction loops ($Z_1$, ..., $Z_N$) respectively associated with a given bidirectional insulator ($I_1$, ..., $I_N$) and capable of regulating, as a function of the intermediate voltage ($V_{P1}$, ..., $V_{PN}$) of the corresponding intermediate grid ($T_1$, ..., $T_N$), the electrical power ($P_1$, ..., $P_N$) delivered by said bidirectional insulator to the distribution bus (16), and therefore by the corresponding unidirectional converter ($C_1$, ..., $C_N$) to the distribution bus (16), on the one hand, and the electrical power ($P'_1$, ..., $P'_N$) delivered by said bidirectional insulator ($I_1$, ..., $I_N$) to the corresponding intermediate grid ($T_1$, ..., $T_N$) on the other hand.

11. The power supply system according to claims 2, 7 and 10, **characterized in that** for each unidirectional converter ($C_1$, ..., $C_N$), the associated storage regulating loop ($X_1$, ..., $X_N$) is capable of regulating the electrical power ($P_1$, ..., $P_N$) delivered by said unidirectional converter ($C_1$, ..., $C_N$) as a function of the storage voltage ($V_{ST}$) via a first control variable ($\varphi_{SS1}$, ..., $\varphi_{SSN}$), the associated distribution regulating loop ($Y_1$, ..., $Y_N$) is capable of regulating the electrical power ($P_1$, ..., $P_N$) delivered by said unidirectional converter ($C_1$, ..., $C_N$) as a function of the distribution voltage ($V_{BUS}$) via a second control variable ($\varphi_{FS1}$, ..., $\varphi_{FSN}$), and the associated positive reaction loop ($Z_1$, ..., $Z_N$) is capable of regulating the power delivered by said unidirectional converter via a third control variable ($\varphi_{P1}$, ..., $\varphi_{PN}$), the power delivered by said unidirectional converter ($C_1$, ..., $C_N$) to the distribution bus (16) being proportional to the difference between the minimum of the first ($\varphi_{SS1}$, ..., $\varphi_{SSN}$) and second ($\varphi_{FS1}$, ..., $\varphi_{FSN}$) control variables on the one hand, and the third control variable on the other hand ($\varphi_{P1}$, ..., $\varphi_{PN}$).

12. The power supply system according to any one of the preceding claims, **characterized in that** the energy storage device (18) is connected to the distribution bus (16) via a two-way loader (26) capable of transferring electric energy between the distribution bus (16) and the energy storage device (18).

13. The power supply system according to claim 12, **characterized in that** the energy storage device comprises a loader regulating loop (BE) capable of controlling the two-way loader (26) to regulate the transfer of electrical energy between the two-way loader (26) and the distribution bus (16) to slave the distribution voltage ($V_{BUS}$) to a reference distribution voltage ($V^*_{BUS}$).

FIG.1

FIG.2

FIG.3

EP 2 610 985 B1

FIG.4

EP 2 610 985 B1

FIG.5

EP 2 610 985 B1

**EP 2 610 985 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006017327 A1
- EP 2363940 A2
- FR 2936221 A1
- WO 9721265 A
- FR 2815789
- US 2005134239 A